(19)

Europäisches
Patentamt
European
Patent Office
Office européen
des brevets

(11) **EP 1 393 519 B1**

(12) **EUROPEAN PATENT SPECIFICATION**

(45) Date of publication and mention
of the grant of the patent:
**21.05.2008 Bulletin 2008/21**

(51) Int Cl.:
***H04L 29/06*** (2006.01)     ***H04Q 7/38*** (2006.01)

(21) Application number: **02726256.7**

(86) International application number:
**PCT/FI2002/000478**

(22) Date of filing: **04.06.2002**

(87) International publication number:
**WO 2002/100065 (12.12.2002 Gazette 2002/50)**

(54) **METHOD AND ARRANGEMENT FOR EFFICIENT INFORMATION NETWORK KEY EXCHANGE**

VERFAHREN UND ANORDNUNG ZUM EFFIZIENTEN INFORMATIONSNETZ-
SCHLÜSSELAUSTAUSCH

PROCEDE ET DISPOSITIF D'ECHANGE EFFICACE DE CLES DE RESEAU D'INFORMATIONS

(84) Designated Contracting States:
**DE FR GB**

(30) Priority: **05.06.2001 FI 20011184**

(43) Date of publication of application:
**03.03.2004 Bulletin 2004/10**

(73) Proprietor: **Nokia Siemens Networks Oy
02610 Espoo (FI)**

(72) Inventors:
• **SOVIO, Sampo
FIN-01260 Vantaa (FI)**

• **NIEMI, Valtteri
FIN-00180 Helsinki (FI)**

(74) Representative: **Pelin, Torolf Johannes et al
Berggren Oy Ab,
P.O. Box 16
00101 Helsinki (FI)**

(56) References cited:
**EP-A1- 1 094 682**     **EP-A2- 1 079 581**
**GB-A- 2 342 817**     **US-A- 6 151 677**

**Description**

TECHNICAL FIELD OF THE INVENTION

This invention provides a method and arrangement for using Internet Key Exchange protocols (IKEv1 and IKEv2). Especially the invention relates to a method and arrangement for efficient Internet key exchange using Internet Key Exchange protocols (IKEv1 and IKEv2) securely in a mobile terminal.

BACKGROUND OF THE INVENTION

The following notions based on Internet Key Exchange (IKEv1 and IKEv2) and Internet Security Association and Key Management (ISAKMP) protocol abbreviations and known from documents RFC2408 and RFC2409 are used in this application:

"CERT" is the certificate payload.

"CKY-I" and "CKY-R" are the initiator's cookie and the responder's cookie, respectively, from the ISAKMP header.

"g^xi" and "g^xr" are the Diffie-Hellman public values of the initiator and responder respectively.

"g^xy" is the Diffie-Hellman shared secret.

"HASH" (and any derivative such as HASH(2) or HASH_I) is the hash payload. The contents of the hash are specific to the authentication method.

"HDR" is an ISAKMP header whose exchange type defines the payload orderings. When written as HDR* it indicates payload encryption.

"HMAC" is keyed-Hashing for Message Authentication Cryptography.

"IDx" is the identification payload for "x". x can be: "ii" or "ir" for the ISAKMP initiator and responder respectively during phase one negotiation.

"IKE" means Internet Key Exchange or Information network Key Exchange protocol, which is an automated protocol for establishing, negotiating, modifying and deleting Security Associations (SAs) between two hosts in a network. The IKE is based on the Internet Security Association and Key Management Protocol (ISAKMP). One version of IKE is IKEv1, but also another version of IKE, IKEv2 (also called Son of IKE or successor to IKE), is published. It should be noticed that IKEv1 is compatible with IKEv2, but on the other hand IKEv2 is not (backward) compatible with IKEv1. A node that implements both IKEv2 and IKEv1 can interwork with an IKEv1 node by detecting that the peer implements only IKEv1, and thereafter communicating using only IKEv1. In this document all examples consider embodiments according to IKEv1 protocol, but the invention can also be applied with IKEv2 or any Information network Key Exchange protocol that comprises the above said basic functionalities.

"ISAKMP" is the Internet Security Association and Key Management Protocol defining procedures and packets to establish, negotiate, modify and delete Security Associations (SAs).

"KE" is the key exchange payload, which contains the public information exchanged in a Diffie-Hellman exchange.

"ME" is Mobile Equipment.

"MS" is a Mobile Station.

"NONCE" is the nonce payload.

"Nx" is the nonce payload; x can be: i or r for the ISAKMP initiator and responder respectively.

"<P>_b" indicates the body of payload <P>. The ISAKMP generic payload is not included.

"PFS" is Perfect Forward Secrecy.

"PRF" stands for Pseudo-random Function, which takes as input a secret, a seed, and an identifying label and produces an output of arbitrary length. PRF is used to generate a deterministic output that appears pseudo-random and it could be used both for key derivations and for authentication.

"SA" is an SA negotiation payload with one or more proposals. An initiator may provide multiple proposals for negotiation; a responder MUST reply with only one.

"SAi_b" is the entire body of the SA payload (minus the ISAKMP generic header).

"SIG" is the signature payload. The data to sign is exchange-specific.

"SKEYID" is a string derived from secret material known only to the active players in the exchange.

"SKEYID_a" is the keying material used by the ISAKMP SA to authenticate its messages.

"SKEYID_d" is the keying material used to derive keys for non-ISAKMP security associations.

"SKEYID_e" is the keying material used by the ISAKMP SA to protect the confidentiality of its messages.

"SN" is a serving network such as Internet or mobile network, which can offer secure connections accordance with at least IKE and ISAKMP protocols.

"TRD" is tamper resistant device, typically a smart card such as SIM, USIM, WIM or SWIM. It may also comprise both SIM (or USIM) and WIM. The TRD comprises typically means for authentication, checking validity of authentication, calculating modular power of big integers and hashes and some encoding functions and means for storing some values and information such as seed of prf, $g^y$, SKEYID, SKEYID_d, SKEYID_a, SKEYID_e, CERT and key K. The TRD may also be implemented using internal security systems of mobile equipment. This kind of systems, which don't use a separate external device, such as a smart card, may be secured and maintained by an internal hardware of the mobile equipment.

"<x>y" indicates that "x" is encrypted with the key "y".

"|" signifies concatenation of information, e.g. X | Y is the concatenation of X with Y.

[x] indicates that x is optional.

Keywords "MUST" and "SHOULD" that appear in this document are to be interpreted as described in [1].

There are presently a large number of security and encryption arrangements, methods and protocols available that are capable for encrypting and signing the delivered messages and transactions or protecting identity in an exchange between two entities in Internet or in other information networks. One security protocol is the Internet Key Exchange protocol (IKE, described in IETF document RFC2409 and its successor IKEv2, Son of IKE), and it provides a method how Internet security protocol (IPSec) security associations (SA) can be negotiated between communicating parties in Internet. More specific the IKE is a protocol for establishing, negotiating, modifying, and deleting Security Associations (SA) between two hosts in a network, where SA contains information to establish a secure connection between the parties on pre-defined manners. The IKE is based on the Internet Security Association and Key Management Protocol (ISAKMP), Oakley and SKEME where Oakley describes a series of key exchanges (called "modes") and details the services provided by each (e.g. perfect forward secrecy for keys, identity protection, and authentication) and SKEME describes a versatile key exchange technique which provides e.g. anonymity, and quick key refreshment.

Negotiation of IPSec SA with IKE is done in two phases. In first phase parties create bi-directional IKE SA (ISAKMP). By using this IKE SA parties will have a secure and authenticated channel and they also have keying material for IPSec SA i.e. string SKEYID_d. In phase 1, parties negotiate first what are the algorithms that are used, then parties make Diffie-Hellman key exchange and finally they make mutual authentication. Phase 1 can be done in two modes namely in main mode or aggressive mode. Main mode MUST be implemented and aggressive mode SHOULD be implemented.

After phase 1 one comes phase 2, where parties can negotiate one or more new IPSec SA, by using quick mode. This quick mode MUST be implemented. In quick mode parties will negotiate the algorithms that are used and if PFS (perfect forward secrecy) is required then there is the possibility to make an additional Diffie-Hellman key exchange. Authentication is done by sending hashes that are derived on SKEYID_a and all messages that are sent are encrypted by key based on SKEYID_e. In new group mode, after phase 1, it is also possible to negotiate new group parameters for following Diffie-Hellman key exchanges. New group mode SHOULD be implemented. In addition after phase 1 one can make informational exchanges for example notify that error has occurred. All messages in IKE are ISAKMP messages and the authentication of the parties is based on public key cryptography.

Nowadays the IKE is commonly used in Internet, but it is assumed that it becomes also common in wireless networks and especially in UMTS. By using UMTS (Universal Mobile Telecommunications System) mobile station one is available to access Internet and so to provide secure connection one needs IKE to get IPSec SAs. The most natural way in UMTS environment would be to put the IKE on SIM, USIM or on other similar means, because responsibility of mutual authentication in UMTS environment on the terminal side is on USIM (User and Services Identity Module) or on other tamper resistant device (TRD).

However, there are certain disadvantages and problems related to the solutions in UMTS environment that were described above. The use of IKE requires quite a large amount of resources and these resources are not available on standard smart cards. Another problem is that IKE works in two phases, and mobile equipment (ME) should not do phase 1 negotiation without TRD. In addition the use of IKE only in ME is not secure, because ME is not a tamper resistant device.

SUMMARY OF THE INVENTION

The object of the invention is to provide a method and an arrangement, which allows the use of IKE (both IKEv1 and IKEv2) in ME in a secure way. The further object of the invention is also to provide a method and arrangement, which deny the collection of large amounts of statistical data about secret keys inside of TRD by attackers.

The objects of the invention are fulfilled by distributing IKE protocol (IKEv1 and/or IKEv2) in secure way between mobile equipment and TRD, so that most of the complex public key operations are done in mobile equipment and authentication is done by TRD. In addition there is a counter in TRD for measuring the number of request from outside, which allows only a certain numbers of request and in that way provide security against, e.g. timing and DPA (Differential Power Analysis) attacks.

According to the one preferred embodiment of the invention the counters can be arranged so that, for example, in phase 1, there is counter COUNTS which is not allowed to exceed a certain limit or bound BOUNDS (for example, BOUNDS = 3). After successful verification of serving network COUNTS is set to zero again. ME itself is not assumed to be a tamper resistant device, so without these counters attackers could at least in principle collect lots of statistical data about secret keys inside of TRD.

According to the invention there are two possible methods for providing the distribution of IKE between TRD and ME and in this document these methods are named simple and complicated scenario. The words "simple" and "complicated" refer to the complexity of the solution from the TRD point of view. In simple scenario ME cannot do the phase 1 negotiation of two IKE phases without TRD, because authentication is done by TRD. However, after phase 1 ME can create IPSec Sas without TRD. In complicated scenario neither phase 1 nor phase 2 is possible without TRD.

The most important requirement for distributing the IKE between TRD and ME in accordance to invention is that IPSec Sas cannot be created without TRD. The IKE protocol will run on ME and some parts of the calculation will be done on TRD. These calculations depend what authentication methods are used. If ME gets g^xy, then ME or some attacker that have access to ME can derive SKEYID and all authenticated keying material. In following is listed how secret strings are derived

For signatures: SKEYID=prf(Ni_b|Nr_b,g^xy)

For public key encryption: SKEYID=prf(hash(Ni_b|Nr_b),CKY-I|CKY-R)

For pre-shared keys: SKEYID=prf(pre-shared-key,Ni_b|Nr_b)

SKEYID is really a secret string also in case of public key encryption because public key encryption has been applied on nonce's Ni_b and Nr_b, so in phase 1 active parties share secret SKEYID and they mutually authenticate. This authentication uses following hashes.

$$\text{HASH\_I} = \text{prf}(\text{SKEYID}, g^{\wedge}xi | g^{\wedge}xr | \text{CKY-I} | \text{CKY-R} | \text{SAi\_b} | \text{IDii\_b})$$

$$HASH\_R = prf(SKEYID, g^{\wedge}xr|g^{\wedge}xi|CKY\text{-}R|CKY\text{-}I|SAi\_b|IDir\_b)$$

The result of phase 1 is following authenticated keying material:

$$SKEYID\_d = prf(SKEYID, g^{\wedge}xy|CKY\text{-}I|CKY\text{-}R,|0)$$

$$SKEYID\_a = prf(SKEYID, SKEYID\_d|g^{\wedge}xy|CKY\text{-}I|CKY\text{-}R,|1)$$

$$SKEYID\_e = prf(SKEYID, SKEYID\_a|g^{\wedge}xy|CKY\text{-}I|CKY\text{-}R,|2)$$

So if SKEYID or g^xy gets outside of TRD, then it is possible that ME can run phase 2 without TRD and therefore create new IPSec SAs itself. In this case it is still possible that IKE SA has been created in the way that it is authorized by TRD.

This means that phase 1 authentication must be done on this TRD and this must be minimum requirement for TRD. In addition it should be possible to TRD check the validity of SN authentication.

The methods and arrangements in accordance with the invention are especially suited for running the IKE in an efficient and secure way in ME. The methods and arrangements according to the invention can be used for example in situation, where an operator, which owns a TRD, offers some application that requires protection against attackers in information network. The connection between the operator and ME is assumed to based on IP, whereupon the connection can be protected with IPSec. The use of IPSec requires a running of IKE, because the IKE allows delivering the needed IPSec SA. The running of IKE is most general and standardized way to use of IPSec.

A method according to the present invention for using an information network Key Exchange (IKE) protocol securely in a mobile equipment (ME) provided with a tamper resistant device (TRD), for an operationally efficient and secure implementation of said protocol, is characterized in that the Key Exchange is distributed between the Mobile Equipment and the tamper resistant device.

An arrangement according to the present invention for using an information network Key Exchange (IKE) protocol securely in mobile equipment (ME) provided with tamper resistant device (TRD), for an operationally efficient and secure implementation of said protocol, is characterized in that the arrangement comprises means for distributing the Key Exchange between the Mobile Equipment and the tamper resistant device.

The best mode of the invention is considered to be the above-mentioned simple scenario, where most of the complex public key operations of IKE protocol are done in ME, and the authentication is done by TRD.

Preferred embodiments of the invention are described in the dependent claims.

BRIEF DESCRIPTION OF THE DRAWINGS

figure 1    illustrates an exemplary embodiment of the arrangement according to the invention,

figure 2    illustrates an exemplary embodiment of the main mode method for authentication with signatures in simpler scenario,

figure 3    illustrates an exemplary embodiment of the aggressive mode method for authentication with signatures in simpler scenario,

figure 4    illustrates another exemplary embodiment of the main mode method for authentication with signatures in simpler scenario,

figure 5    illustrates another exemplary embodiment of the aggressive mode method for authentication with signatures in simpler scenario,

figure 6    illustrates an exemplary embodiment of the main mode method for authentication with signatures in complicated scenario,

figure 7    illustrates an exemplary embodiment of the aggressive mode method for authentication with signatures in complicated scenario,

figure 8    illustrates another exemplary embodiment of the main mode method for authentication with signatures in complicated scenario,

figure 9    illustrates another exemplary embodiment of the aggressive mode method for authentication with signatures in complicated scenario,

figure 10    illustrates an exemplary embodiment of the main mode method for authentication with public key encryption in simpler scenario,

figure 11    illustrates an exemplary embodiment of the aggressive mode method for authentication with public key encryption in simpler scenario,

figure 12    illustrates another exemplary embodiment of the main mode method for authentication with public key encryption in simpler scenario,

figure 13    illustrates another exemplary embodiment of the aggressive mode method for authentication with public key encryption in simpler scenario,

figure 14    illustrates an exemplary embodiment of the main mode method for authentication with public key encryption in complicated scenario,

figure 15    illustrates an exemplary embodiment of the aggressive mode method for authentication with public key encryption in complicated scenario,

figure 16    illustrates another exemplary embodiment of the main mode method for authentication with public key encryption in complicated scenario,

figure 17    illustrates another exemplary embodiment of the aggressive mode method for authentication with public key encryption in complicated scenario,

figure 18    illustrates an exemplary embodiment of the main mode method for authentication with pre-shared key in simpler scenario,

figure 19    illustrates an exemplary embodiment of the aggressive mode method for authentication with pre-shared key in simpler scenario,

figure 20    illustrates another exemplary embodiment of the main mode method for authentication with pre-shared key in simpler scenario,

figure 21    illustrates another exemplary embodiment of the aggressive mode method for authentication with pre-shared key in simpler scenario,

figure 22    illustrates an exemplary embodiment of the main mode method for authentication with pre-shared key in complicated scenario,

figure 23    illustrates an exemplary embodiment of the aggressive mode method for authentication with pre-shared key in complicated scenario,

figure 24    illustrates another exemplary embodiment of the main mode method for authentication with pre-shared key in complicated scenario,

figure 25    illustrates another exemplary embodiment of the aggressive mode method for authentication with pre-shared key in complicated scenario,

figure 26    illustrates an exemplary embodiment of the method for authentication with quick mode method, and

figure 27    illustrates another exemplary embodiment of the method for authentication with quick mode method.

DETAILED DESCRIPTION OF THE DRAWINGS

Next the invention will be described in greater detail with reference to exemplary embodiments in accordance with the accompanying figures. At first there is considered authentication with signature in two different ways, namely simple and considered authentication with signature in two different ways, namely simple and complicated scenarios. Now the words "simple" and "complicated" refer to the complexity of the solution from the TRD point of view.

At second there is considered authentication with public key encryption in simple and complicated scenarios. The authentication with revised mode of public key encryption according to the IKE and ISAKMP protocols are only mentioned casually. Next the authentication with pre-shared key is considered in simple and complicated scenarios.

In addition there are also illustrated two different modes according to the IKE and ISAKMP protocols, namely main and aggressive mode and also considered situations, where at first MS is initiator and SN is responder and situations, where at second MS is responder and SN is initiator in the cases mentioned above. Last the quick mode is described.

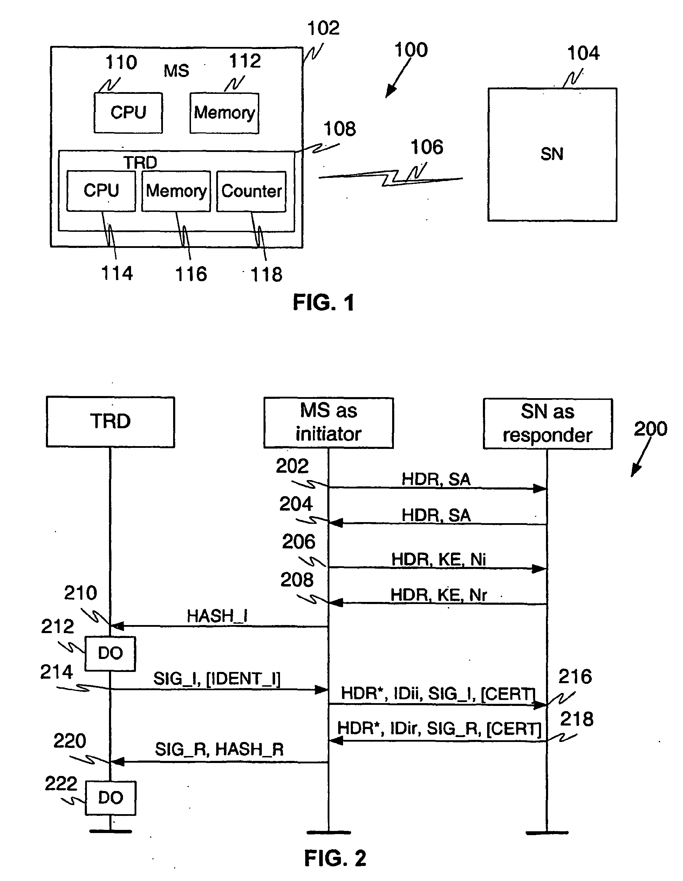

Figure 1 illustrates an exemplary embodiment 100 of the arrangement according to the invention, where 102 is mobile equipment comprising at least one tamper resistant device (TRD) 108. The TRD can be for example USIM or WIM smart card and it can comprise processor (CPU) 114, memory means 116 and at least one counter 118. The TRD can be also SWIM, which is a smart card that has both SIM (or USIM) and WIM. In addition the mobile equipment also can comprises CPU 110 and memory means 112. The mobile equipment can be connected for example in wireless way 106 to some service network 104 such as an Internet.

In addition the TRD comprises typically means for phase 1 authentication, means for checking validity of SN authentication, means for calculating modular power of big integers and hashes and some encoding functions and means for storing some values and information such as seed of prf, g^y, SKEYID, SKEYID_d, SKEYID_a, SKEYID_e, CERT and K.

However, it should be noticed that according to one embodiment of the invention TRD could at least partly be implemented using internal security systems of mobile equipment. This kind of system, which does not use a separate external device, such as a smart card, may be secured and maintained by an internal hardware of the mobile terminal.

Figure 2 illustrates an exemplary embodiment 200 of the main mode method for authentication with signatures in simpler scenario, where it is assumed first that initiator is MS and responder is SN. Now proposal of the initiator must contain only those signature algorithms and encryption algorithm for IDENT_I, that are supported TRD. In the simpler scenario SKEYID is given to ME. The simple means here, that the process is simple for TRD.

In step 202 the MS sends an SA message to the SN, which message contains ISAKMP header HDR. The SA message contains proposals about the crypto parameters, hash algorithms and other essentials parameters, which could be used in message exchange transactions. In step 204 the SN sends a reply message SA containing the header HDR to the MS. The message SA in step 204 also contains information about the algorithms chosen by the SN from the initial algorithms sent by MS in step 202 in its SA message. These algorithms will be used in future. Next in step 206 the MS sends the key exchange payload KE, which contains the public information exchanged in a Diffie-Hellman exchange and the nonce payload Ni of the initiator to the SN (message contains also header HDR). The SN replies to the MS in step 208 by a message, which contains the key exchange payload KE, the nonce payload of the responder Nr and the header HDR. Now in step 210 the MS derives and sends the HASH_I to the TRD, which performs some operations (DO) in step 212. These operations include at least increasing the COUNTS and comparing the COUNTS to the BOUNDS set beforehand. If the COUNTS is smaller than the BOUNDS, the TRD carries out the step 214. Otherwise the TRD terminates the session. In step 214 the TRD sends the signature payload SIG_I to the MS. The TRD may also send information about its identity IDENT_I, but sending the IDENT_I is optional action (denoted by brackets). In step 216 the MS sends the encrypted payload HDR*, identification payload of initiator Idii and the signature payload of initiator SIG_I to the SN. The MS may also send the certificate payload [CERT], but it is optional. The SN sends reply message to the MS in step 218, which message contains the encrypted payload HDR*, identification payload of responder Idir and the signature payload of responder SIG_R to the MS. The SN may also send the certificate payload [CERT], but it is optional. After this the MS sends the responders signature payload SIG_R and the hash payload HASH_R to the TRD in step 220. Now the TRD can verify the SIG_R in step 222 and if SIG_R is valid, the TRD sets the COUNTS to zero. Otherwise the TRD terminates the session.

An inventive step in the above-mentioned embodiment according to the invention is to put the counter COUNTS on the TRD, which counts the number of signatures generated by the TRD. There are upper bound BOUNDS that COUNTS cannot exceed. The reason for COUNTS is that otherwise the terminal can ask the TRD to sign a large number of signatures and get some extra information for signing key of the TRD. This also gives protection against DPA attacks.

However, according to the invention it is proposed that TRD should give Identification Data on Identification Payload IDii denoted by IDENT_I. To guarantee that the identity is from the TRD, it should be encrypted by responders public key. This IDENT_I can be for example IMSI and in Identification Payload the ID Type is ID_KEY_ID (see RFC2407).

In this scenario the TRD must contain algorithms for signature, DSS signatures, RSA signatures or both of them. So ability to calculate modular powers of big integers and hashes and some encoding functions are needed in the TRD. Signing verification requires two PK operations on the TRD and if encryption of IDENT_I is required the total number of PK operations is three.

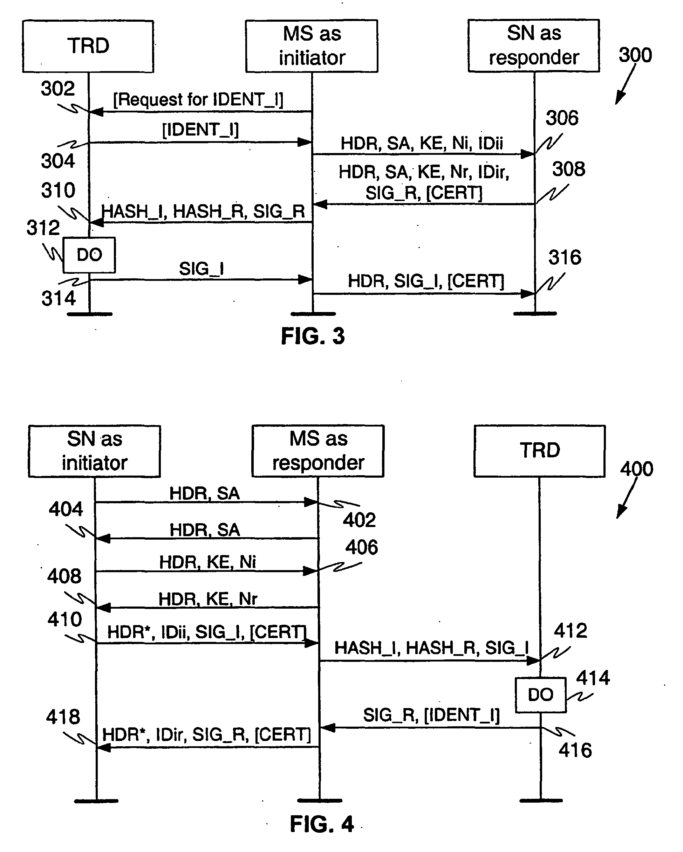

Figure 3 illustrates an exemplary embodiment 300 of the aggressive mode method for authentication with signatures in simpler scenario in conjunction with ISAKMP. At the beginning of the aggressive mode the MS may request the initiators identity IDENT_I from the TRD in step 302, and the TRD may reply with IDENT_I in step 304, but these steps are however optional (denoted by brackets). In aggressive mode the MS sends the header payload HDR, SA, KE, Ni and IDii information in same time in step 306 to the SN, and the SN replies by sending information including header payload HDR, SA, KE, responders Nr, IDir and SIG_R in step 308. The SN may also send the certificate payload CERT, but it is optional. Now the MS derives the HASH_I and HASH_R and send them and SIG_R to the TRD in step 310. The TRD can verify SIG_R in step 312 and send its own signature payload SIG_I to the MS in step 314. After this the MS sends the HDR and SIG_I information to the SN in step 316. MS may also send the CERT information, but it is optional.

In this exemplary embodiment the BOUNDS is not needed because the TRD first verifies the SIG_R, before it reveals the SIG_I. It is proposed that IDENT_I should be encrypted by responders public key, when three PK operations is needed. Required sizes of the algorithms in the TRD are approximately the same as in main mode, although the number of ISAKMP messages between initiator and responder has been significantly reduced. Unlike main mode no ISAKMP messages are encrypted so the aggressive mode does not secure identities for outsiders, but if IDENT_I is provided by the TRD and is encrypted then identity of initiator is not achieved for attacker.

Figure 4 illustrates another exemplary embodiment 400 of the main mode method for authentication with signatures in simpler scenario. In this embodiment the initiator is SN and the responder is MS. Now proposal of initiator must contain only those signature algorithms and encryption algorithm for IDENT_I, that are supported TRD.

At first the SN sends the proposal payload SA and the header payload HDR to the MS in step 402. In step 404 the MS sends a reply message SA containing the header HDR to the SN, which message SA contains information about the algorithms chosen by the MS. Next in step 406 the SN sends HDR, KE and its nonce payload Ni to the MS and MS replies by its nonce payload Nr, KE and HDR in step 408. After this the SN sends the encrypted payload header HDR*, its identification payload IDii and signature SIG_I to the MS in step 410. The SN may also send its certificate payload, but it is optional. In step 412 the MS can derive the HASH_I and HASH_R and send them with SIG_I to the TRD, which verifies the SIG_I in step 414. If the SIG_I is valid, the TRD send its signature payload SIG_R to the MS in step 416. The TRD may also send its identification payload, but it is optional. Finally in step 418 the MS sends the encrypted header HDR*, its identification payload IDir and signature payload SIG_R to the SN. The MS may also send its certification payload, but it is optional.

This embodiment does not put any extra requirements for the TRD comparing previous situation. It has to be noted that COUNTS is not needed because the TRD first checks validity of other parties signature before it reveals SIG_R.

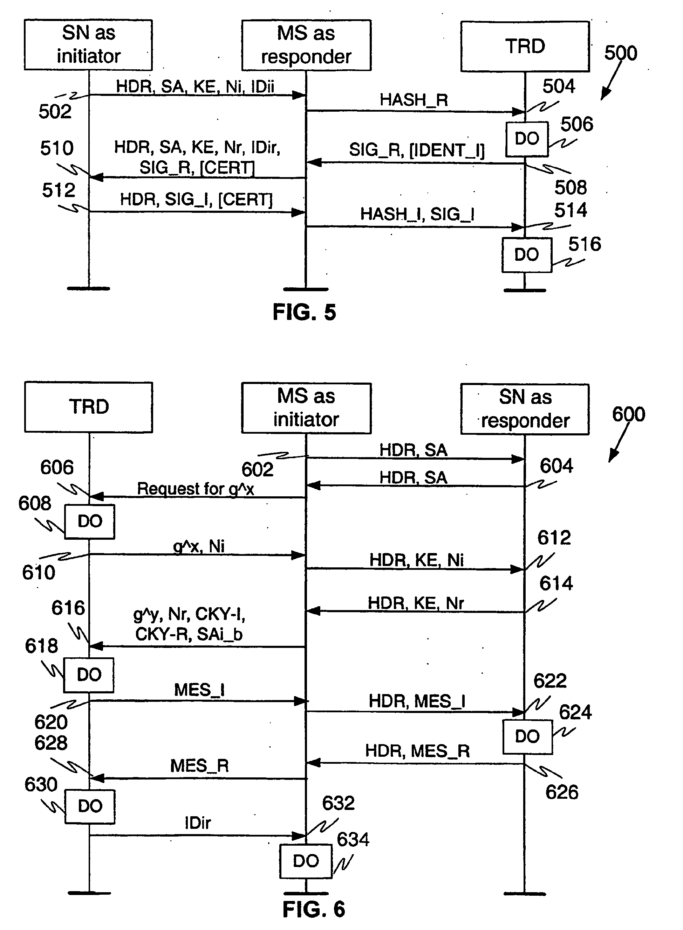

Figure 5 illustrates another exemplary embodiment 500 of the aggressive mode method for authentication with signatures in simpler scenario, where the initiator is SN and the responder is MS.

In the beginning in step 502 the SN sends HDR, SA, KE Ni and IDii payloads to the MS, which can derive the HASH_R and send it to the TRD in step 504. The TRD increases the COUNTS by one in step 506 and compare the COUNTS to the BOUNDS. If the COUNTS is smaller than the BOUNDS, the TRD sends its signature payload SiG_R to the MS in step 508. Otherwise the TRD terminates the session. The TRD may also send its identity IDENT R to the MS in step 508, but it is optional. In step 510 the MS sends HDR, SA, KE, Nr, IDir and SIG_R to the SN, which reply with the HDR and SIG_I payloads in step 512. The MS and SN may also send their certificate payload to each other, but it is optional. In step 514 the MS can derive the HASH_I and send HASH_I and SIG_I to the TRD, which verify the SIG_R in step 516. If the SIG_R is valid, the COUNTS is set zero, and if the SIG_R is not valid the TRD terminates the session. In this embodiment the COUNTS is needed because otherwise the ME could send lot of signing requests to the TRD.

Figure 6 illustrates an exemplary embodiment 600 of the main mode method for authentication with signatures in the complicated scenario, where it is assumed that initiator is MS and responder is SN.

The MS starts the session by sending header payload HDR and SA message to the SN in step 602 and in step 604 the SN replies with HDR and SA payloads. In step 606 the MS send a request for g^x to the TRD and the TRD increase the request counter COUNTR by one in step 608. In step 608 the TRD also compares the COUNTR to the boundary of request BOUNDR and if the COUNTR is smaller than BOUNDR, the TRD generates the pseudo random x and Ni and send g^x and Ni to the MS in step 610. The MS sends HDR, KE and Ni to the SN in step 612, when the SN responds by sending the HDR, KE and Nr payloads to the MS in step 614. Now the MS can derive and send the g^y, Nr and initiators and responders cookies CKY-I, CKY-R and SAi_b payload to the TRD in step 616. The SAi_b is the entire body of the SA payload without the ISAKMP generic header. The TRD increase the COUNTS by one and compare the COUNTS to the BOUNDS in step 618. If the COUNTS is smaller than the BOUNDS, the TRD calculates (g^y)^x, SKEYID, SKEYID_d, SKEYID_a, SKEYID_e, HASH_I and HASH_R in step 618. The TRD derives also symmetric key K from SKEYID_e in this step and encrypts IDii and SIG_I without header by using K. The TRD may also encrypts its certificate payload CERT, but it is optional. Now the encrypted message is denoted by MES_I. The TRD sends the MES_I to the MS in step 620, which sends MES_I and HDR to the SN in step 622. The SN encrypts its identification payload IDir and signature payload SIG_R by K in step 624 and denotes this encrypted message by MES_R. The SN may also encrypt its certificate payload CERT, but it is optional. The SN sends HDR and MES_R to the MS in step 626 and in step 628 the MS sends the MES_R to the TRD. The TRD decrypts MES_R and verifies SIG_R in step 630 and if SIG_R is valid, TRD sets the COUNTR and COUNTS to zero. After this the TRD sends responders identification payload IDir to the MS in step 632, which can verify IDir in step 634.

In this embodiment the ME cannot perform man-in-the-middle attack, because if the ME sends some g^z to the TRD, then the TRD gives out false SIG_I which is based on g^x and g^z. Next responder tries to verify this false SIG_I, responder notices that this signature is not based on g^y and is therefore not accepted. Although the ME could get some statistical data if it can send a lot of false g^y:s, there the COUNTS is needed. Because MES_I is encrypted, there is no need for encrypted IDENT_I. In this scenario there is also counter COUNTR on the TRD that counts generated pseudorandom numbers. That is done to avoid attacker get too much information about seed of pseudo random function (prf). The TRD must be capable to calculate modular powers of big integers, calculate hashes and proper encoding methods, like in simpler scenario. For this scenario prf and symmetric key cipher is needed. The TRD should also store seed of prf, g^y, SKEYID, SKEYID_d, SKEYID_a, SKEYID_e, K and possible CERT. Now four calculations of modular powers with big integers are required in the TRD. These are calculating g^x, (g^y)^x, SIG_I and verifying SIG_R.

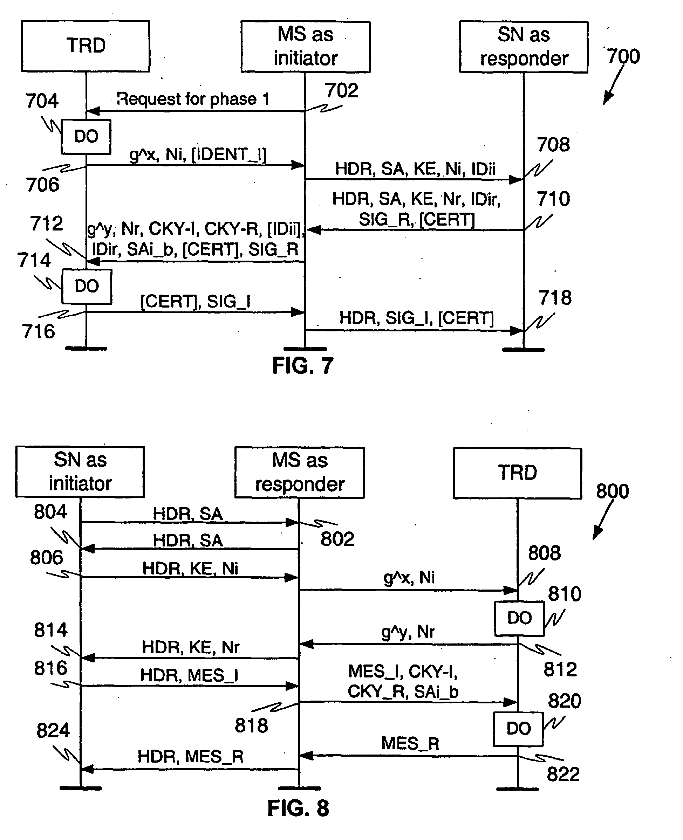

Figure 7 illustrates an exemplary embodiment 700 of the aggressive mode method for authentication with signatures in complicated scenario in conjunction with ISAKMP.

At first in step 702 the MS sends request for phase 1 to the TRD, which increase COUNTR by one and calculates pseudorandom x, Ni and g^x in step 704. In step 706 the TRD sends g^x and Ni to the MS. The TRD may also send its identity IDENT_I to the MS, but the sending the IDENT_I is optional. In step 708 the Ms sends the HDR, SA, KE, Ni and IDii to the SN, which replies with HDR, SA, KE, Nr, IDir and SIG_R payloads in step 710. The SN may also send its certificate payload CERT to the MS, but it is optional. In step 712 the MS derives and sends g^y, Nr, CKY_I, CKY_R, IDir, Sai_b and SIG_R to the TRD. MS may also send CERT and IDii payloads to the TRD, but it is optional. The TRD calculate (g^x)^y and HASH_I in step 714 and verifies SIG_R. If SIG_R is valid, TRD sets the request counter COUNTR to zero and calculates HASH_R, SIG_R, SKEYID, SKEYID_d, SKEYID_a and SKEYID_e. After step 714 the TRD sends SIG_I to the MS in step 716. The TRD may also send the certificate payload CERT to the MS, but it is optional. The MS sends the HDR and SIG_I and possible CERT to the SN in step 718.

Requirements in this aggressive mode are similar than in main mode, except symmetric cipher is not needed. In addition the ME get directly IDir, because it is not encrypted.

Figure 8 illustrates another exemplary embodiment 800 of the main mode method for authentication with signatures in complicated scenario, where the initiator is SN and the responder is MS.

At first in step 802 the SN sends HDR and SA payloads to the MS, which replies with HDR and SA payloads respectively in step 804. Next in step 806 the SN sends HDR, KE and Ni payloads to MS, which calculates and sends g^y and Ni to the TRD in step 808. The TRD increase COUNTR by one and compare the COUNTR to the BOUNDR in step 810. If the COUNTR is smaller than BOUNDR, the TRD generates pseudo random y and Nr and calculates g^y and send Nr and g^y to the MS in step 812. Now the MS sends the HDR, KE and Nr to the SN in step 814, which replies with HDR and MES_I in step 816. The MS derives and send the MES_I, CKY_I, CKY_R and Sai_b to the TRD in step 818, which calculates g^xy, SKEYID, SKEYID_d, SKEYID_a and SKEYID_e, derives symmetric key K from SKEYID_d, decrypts MES_I with K, calculates HASH_I and verifies SIG_I in step 820. If SIG_I is valid, the TRD calculates HASH_R and SIG_R and encrypts datagram IDir and SIG_R with K. The TRD may also encrypt its CERT, but it is optional. In step 820 the TRD also sets COUNTR to zero and sends MES_R to the MS in step 822. In step 824 the MS sends HDR and MES_R to the SN.

In this embodiment the requirements for the TRD are same as when MS is initiator.

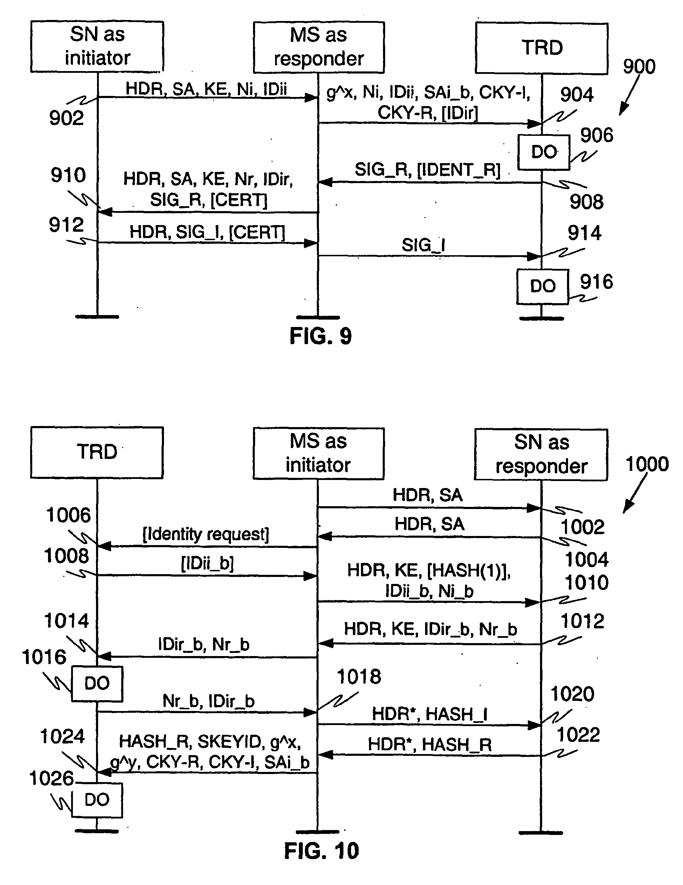

Figure 9 illustrates another exemplary embodiment 900 of the aggressive mode method for authentication with signatures in complicated scenario,

In step 902 of aggressive mode the SN sends HDR, SA, KE, Ni and IDii to the MS, which calculates and sends g^x, Ni, IDii, Sai_b, CKY-I and CKY-R to the TRD in step 904. The MS may also send its identification payload to the TRD, but it is optional. In step 906 the TRD increases the COUNTS by one and compares the COUNTS to the BOUNDS. If the COUNTS is smaller than the BOUNDS, the TRD generates pseudo random y and Nr, calculates g^y, g^xy, SKEYID, SKEYID_d, SKEYID_a, SKEYID_e, HASH_R and SIG_R. After this the TRD sends SIG_R and possible IDENT_R (optional) to the MS in step 908, which sends HDR, SA, KE, Nr, IDir, SIG_R and possible CERT (optional) to the SN in step 910. The SN sends HDR, SIG_I and possible CERT (optional) to the MS in step 912, which sends SIG_I to the TRD in step 914. The TRD calculates HASH_I and verifies SIG_I in step 916. If the SIG_I is valid, the TRD sets the COUNTS to zero.

Figure 10 illustrates an exemplary embodiment 1000 of the main mode method for authentication with public key encryption in simpler scenario. Using public key encryption to authenticate the exchange, the ancillary information exchanged is encrypted nonces. Each party's ability to reconstruct a hash (proving that the other party decrypted the nonce) authenticates the exchange.

In order to perform the public key encryption, the initiator must already have the responder's public key. In the case where the responder has multiple public keys, a hash of the certificate the initiator is using to encrypt the ancillary information is passed as part of the third message. In this way the responder can determine which corresponding private key to use to decrypt the encrypted payloads and identity protection is retained.

In addition to the nonce, the identities of the parties (IDii and IDir) are also encrypted with the other party's public key. If the authentication method is public key encryption, the nonce and identity payloads MUST be encrypted with the public key of the other party. Only the body of the payloads are encrypted, the payload headers are left in the clear.

In simpler scenario private key is stored on the TRD and therefore without it the ME cannot create IKE SA. Let's first assume that the initiator is MS and the responder is SN.

At first in step 1002 the MS sends HDR and SA payloads to the SN, which replies with HDR and SA payloads respectively in step 1004. In step 1006 the MS may send the request to the TRD for identification payload encrypted by responders public key and in step 1008 the TRD may responds to the request. Now the encrypted message can be decrypted only responders secret key. The step 1006 is optional, so the TRD will respond to the request in step 1008 only if the request is sent in step 1006. In step 1010 the MS sends HDR and KE payloads to the SN, where the KE payload includes the required information for Diffie-Hellmann key exchange. The MS sends also IDii_b and Ni_b encrypted by responders (SN) public key (IDii and Ni are without generic header). In addition the MS may derive and send HASH (1) to the SN, but it is optional. In step 1012 the SN sends HDR, KE, IDir_b and Nr_b payload to the MS, where KE includes information about key exchange, IDir_b is encrypted information about identity of SN and Nr_b is nonce of SN encrypted by public key of the TRD. In step 1014 the MS transmits encrypted messages to the TRD, because only the TRD can decrypt them. In step 1016 the TRD increases COUNTD by one and compares the COUNTD to the BOUND and if the COUNTD is smaller than the BOUND, carries out the decryption and send the decrypted Nr_b and IDir_b to the MS in step 1018. Now the MS knows the nonces of both parties and can calculate the SKEYID and further the HASH_I. In step 1020 the MS sends the encrypted header HDR* and HASH_I to the SN, which responds with HDR* and HASH_R in step 1022. In step 1024 the MS sends the HASH_R and required information for calculate the HASH_R to the TRD. The g^x and g^y means information in key exchange messages between the MS and SN and CKY-R and CKY-I are cookies in ISAKMP header. The function of these cookies is to be so called quick identifier. Finally in step 1026 the TRD calculates HASH_R and compare it to given HASH_R. Calculating the HASH_R assume the knowledge of IDir_b. If HASH_R is valid, the TRD sets the COUNTD to zero. Otherwise the TRD terminates the session.

In this embodiment the counter COUNTD has similar meaning as COUNTS in signature based authentication. In this case where Nr_b is revealed to ME, it can calculate HASH_I, but the ME cannot calculate HASH_R because, only the TRD knows IDir_b. Here two Public Key operations for the TRD are needed. If identity of the TRD should be protected, the three PK operations are needed, one extra for IDii encrypted by responders public key. So the TRD must be able to calculate modular powers of big integers, that crucial point in decryption of Nr_b encrypted by initiators public key. The TRD must also be capable to calculate hashes. If whole RSA encryption in PKCS #1 format is required, then the TRD must have ability to calculate some encoding methods.

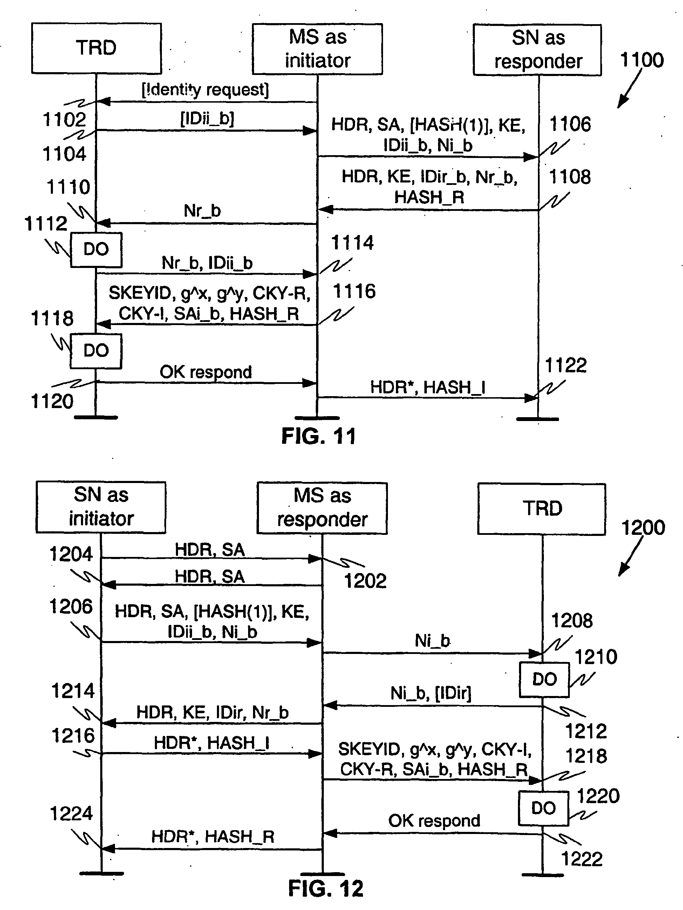

Figure 11 illustrates an exemplary embodiment 1100 of the aggressive mode method for authentication with public key encryption in simpler scenario. In the aggressive mode the three firsts steps 1102 - 1006 are similar than steps 1006 - 1010 in main mode. In step 1108 the SN sends HDR, KE, IDir_b and Nr_b payload to the MS, where IDir_b is encrypted information about identity of SN and Nr_b is nonce of SN encrypted by public key of the TRD. In step 1110 the MS sends the encrypted Nr_b to the TRD, which increases the COUNTD by one and if the COUNTD is smaller than the BOUNDD, decrypts encrypted IDii_b and Nr_b payloads by its private key in step 1112. After this the TRD sends decrypted Nr_b and IDii_b to the MS in step 1114, which sends the HASH_R and required information for calculate the HASH_R to the TRD in step 1116. Now the TRD calculates HASH_R and compares it to given HASH_R in step 1118. If HASH_R is valid, the TRD sets the COUNTD to zero. Otherwise the TRD terminates the session. Finally the TRD sends OK respond to the MS in step 1120, which sends the encrypted header HDR* and HASH_I to the SN in step 1122.

In the aggressive mode the requirements are same as in main mode. One should note that although HASH_I and HASH_R are sent as plaintext, identities IDix_b are encrypted.

Figure 12 illustrates another exemplary embodiment 1200 of the main mode method for authentication with public key encryption in simpler scenario, where the responder is MS and the initiator is SN.

In step 1202 the SN sends HDR and SA to the MS, which responds in step 1204 by sending HDR and SA respectively. In step 1206 the SN send HDR, SA, KE and IDii_b and Ni_b encrypted by public key of the TRD to the MS. The SN may also send HASH(1), but it is optional. In step 1208 the MS sends encrypted Ni_b to the TRD, which increases the COUNTD by one in step 1210 and if the COUNTD is smaller than the BOUNDD, decrypts IDii_b and Ni_b by its private key and sends decrypted Ni_b and possible IDir encrypted by public key of TRD to the MS in step 1212. In step 1214 the MS sends HDR, KE, encrypted IDir and Nr_b to the SN. The SN calculates and sends the encrypted header HDR* and HASH_I to the MS in step 1216, which derives and sends SKEYID, g^x, g^y, CKY-I, CKY-R, Sai_b and HASH_R to the TRD in step 1218. In step 1220 the TRD calculates HASH_R by information send by MS and compares HASH_R to given HASH_R. If HASH_R is valid, the TRD sets the COUNTD to zero and sends OK respond to the MS in step 1222. Otherwise the TRD terminates the session. In step 1224 the MS sends encrypted header HDR* and HASH_R to the SN.

Again in this embodiment the requirements for the TRD are same as in situation where MS is initiator.

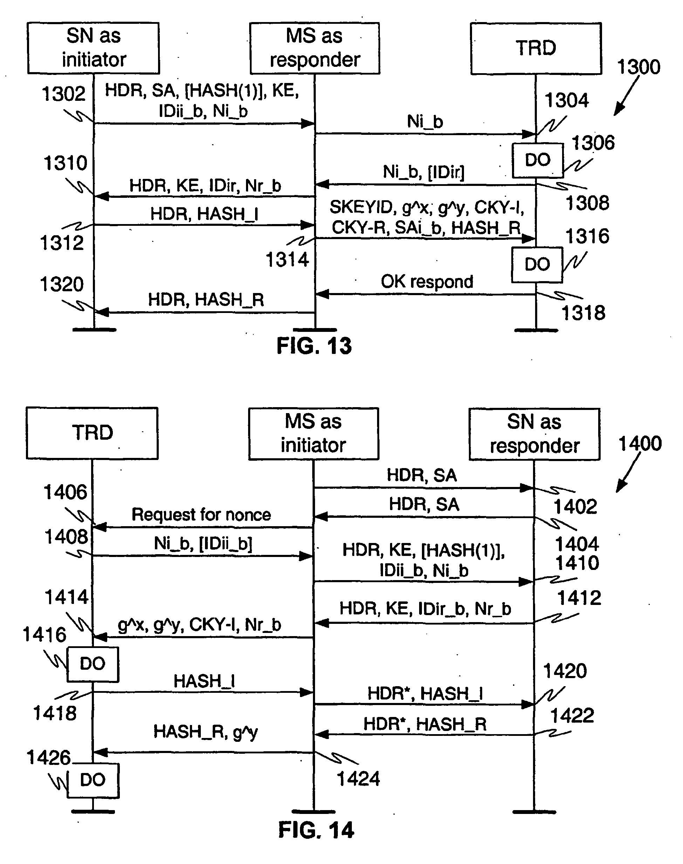

Figure 13 illustrates an exemplary embodiment 1300 of the aggressive mode method for authentication with public key encryption in simpler scenario. The aggressive mode is analogous to the main mode (shown in figure 12), but there is no exchange of HDR and SA in the beginning and in step 1312 and 1320 HDR is not encrypted. The requirements for the TRD are same as in main mode.

Figure 14 illustrates an exemplary embodiment 1400 of the main mode method for authentication with public key encryption in complicated scenario, where it is assumed that the initiator is MS and the responder is SN. In this scenario, IKE SA is created but not revealed to the ME. This scenario has advantage, that ME the cannot run quick mode without the TRD.

The steps 1402 and 1404 are known from previous embodiments of the invention. In step 1406 the MS sends request for nonce to the TRD, and the TRD replies with Ni_b and possible IDii_b, both encrypted by public key of the SN, in step 1408. In step 1410 the MS derives and sends HDR, KE, possible HASH(1), and encrypted IDii_b and Ni_b to the SN, which responds in step 1412 with HDR, KE and IDir_b and Nr_b payloads encrypted by public key of the TRD. In step 1414 the MS derives and sends g^x, g^y, CKY-I, CKY-R and encrypted Nr_b to the TRD, which increases the COUNTD by one and compares the COUNTD to the BOUNDD in step 1416. If the COUNTD is smaller than the BOUNDD, the TRD decrypts encrypted Nr_b and calculated SKEYID, SKEYID_d, SKEYID_a, SKEYID_e and HASH_I and derive key K from SKEYID_d. Finally the TRD sends HASH_I encrypted by K to the MS in step 1418, which in step 1420 sends encrypted header HDR* and HASH_I to the SN. The SN responds with encrypted header HDR* and HASH_R in step 1422, and the MS sends HASH_R encrypted by K and g^y to the TRD in step 1424. In step 1426 the TRD calculates HASH_R, decrypts encrypted HASH_R and if these HASH_R:s are same, sets COUNTD to zero. Otherwise the TRD terminates the session.

In this embodiment the requirements for the TRD are same as in the simpler scenario plus symmetric key cipher must be in the TRD and one extra PK operation in the TRD for Nr_b is required. Also the TRD must store SKEYID, SKEYID_d, SKEYID_a, SKEYID_e.

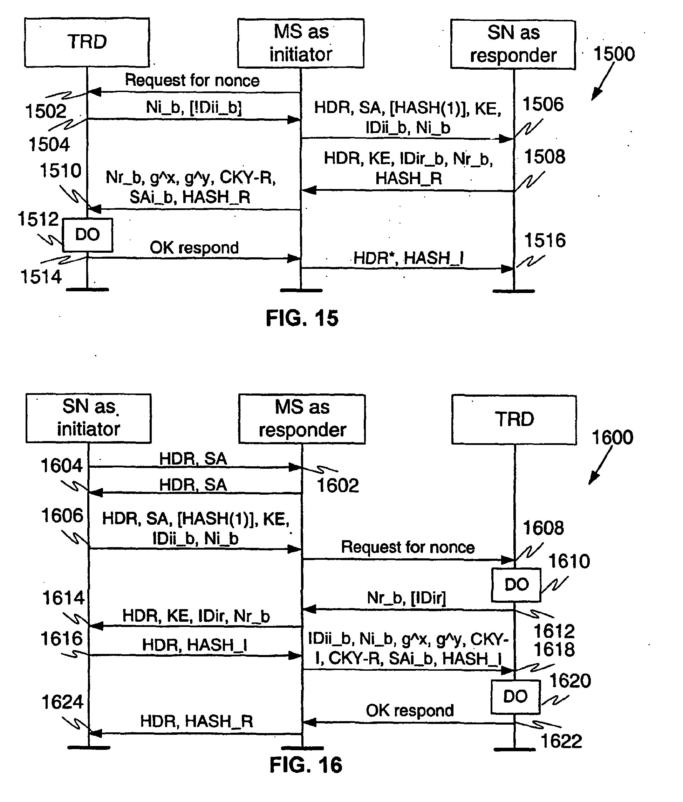

Figure 15 illustrates an exemplary embodiment 1500 of the aggressive mode method for authentication with public key encryption in the complicated scenario. At first in step 1502 the MS sends request for nonce to the TRD, which encrypts Ni_b and possible IDii_b by public key of the SN and send them to the MS in step 1504. The MS derives and sends the HDR, SA, possible HASH(1), KE and encrypted IDii_b and Ni_b to the SN in step 1506. The SN derives and sends HDR, KE and HASH_R to the MS in step 1508. In addition the SN encrypts IDir_b and Nr_b by public key of the TRD and sends them to the MS. In step 1510 the MS derives and sends g^x, g^y, CKY-R, Sai_b HASH_R and encrypted Nr_b to the TRD, which in step 1512 increases the COUNTD by one and if the COUNTD is smaller than the BOUNDD, decrypts the encrypted IDii and Nr_b and calculates SKEYID, SKEYID_d, SKEYID_a, SKEYID_e and HASH_R. In addition the TRD compares HASH_R to the given HASH_R and if HASH_R is valid, sets the COUNTD to zero and send the OK respond to the MS in step 1514. Otherwise the TRD terminates the session. In step 1516 the MS sends encrypted header HDR* and HASH_I to the SN.

In this embodiment the requirements are same as in main mode except symmetric key cipher is not needed.

Figure 16 illustrates another exemplary embodiment 1600 of the main mode method for authentication with public key encryption in the complicated scenario, where the MS is the responder and SN is the initiator. Now the operations in steps 1602 - 1608 are known from previous embodiments. In step 1610 the TRD encrypts IDir and Nr_b by initiators public key and sends encrypted IDir and Nr_b to the Ms in step 1612. Again steps 1614 - 1618 are known from previous embodiments of invention. In step 1620 the TRD increases the COUNTD by one and compares the COUNTD to the BOUNDD. If the COUNTD is smaller than the BOUNDD, the TRD decrypts IDii_b and Ni_b and calculates HASH_I and compares it to given HASH_I. If calculated and given HASH_I are same, the COUNTD is set to zero. Otherwise the TRD terminates the session. In step 1622 the TRD sends Ok respond to the MS, which sends HDR and HASH_R to the SN in step 1624.

The requirements in this embodiment for the TRD are same as in situation where the MS is initiator.

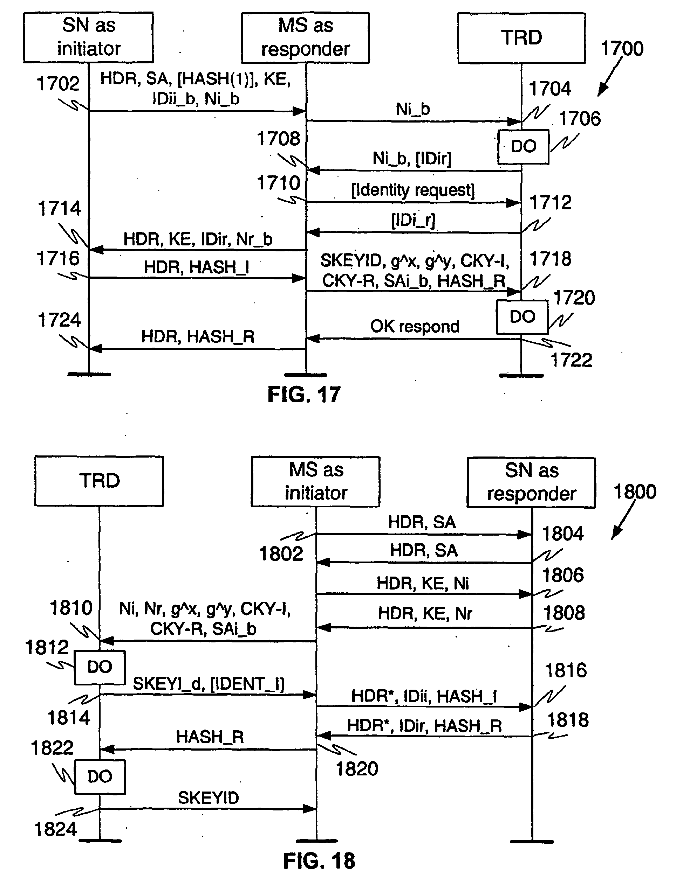

Figure 17 illustrates another exemplary embodiment 1700 of the aggressive mode method for authentication with public key encryption in the complicated scenario. The operations in steps 1702 and 1704 are known from previous embodiments. In step 1706 the TRD increases the COUNTD by one and compares the COUNTD to the BOUNDD. If the COUNTD is smaller than the BOUNDD, the TRD decrypts IDii_b and Ni_b. Again steps 1708 - 1718 are known from previous embodiments of the invention. In step 1720 the TRD calculates HASH_R and compares it to given HASH_R. If calculated and given HASH_R are same, the COUNTD is set to zero. Otherwise the TRD terminates the session. In step 1722 the TRD sends Ok respond to the MS, which sends HDR and HASH_R to the SN in step 1724.

Also now the requirements for the TRD are same as in main mode.

Authentication with Public Key has that draw back that it needs four PK operations. So especially in complicated scenario this can be problem, because the TRD don't have great computational capacity. Idea of revised mode, is simply that encryption of IDix, is replaced by encryption of symmetric key cipher. So three PK operations would be adequate. One should notice that this would help the TRD only when IDix is protected by the TRD.

Figure 18 illustrates an exemplary embodiment 1800 of the main mode method for authentication with pre-shared key in the simpler scenario. Idea in this mode is that the TRD contains pre-shared key that is not exposed to anybody. So without the TRD the ME cannot authenticate. It is first assumed, that the MS is the initiator and the SN is the responder.

Also now operations in step 1802 - 1810 are known from previous embodiments of the invention. In step 1812 the TRD increases the COUNTP by one and compares the COUNTP to the BOUNDP. If the COUNTP is smaller than the BOUNDP, the TRD calculates SKEYID, SKEYID_d, SKEYID_a and SKEYID_e. Again steps 1814 - 1820 are known from previous embodiments. In step 1822 the TRD calculates HASH_R and compares it to given HASH_R. If calculated and given HASH_R are same, the COUNTP is set to zero. Otherwise the TRD terminates the session. In step 1824 the TRD sends SKEYID to the MS.

This method has very light requirements especially for the TRD. Both TRD and MS don't need any PK operations. One PK operation for the TRD is needed, if IDENT_I is sent. Here the TRD must calculate SKEYID and HASH_R; these are simply calculating prf i.e. HMAC. SKEYID_d can be given to the MS, because the MS can't derive SKEYID from SKEYID_d.

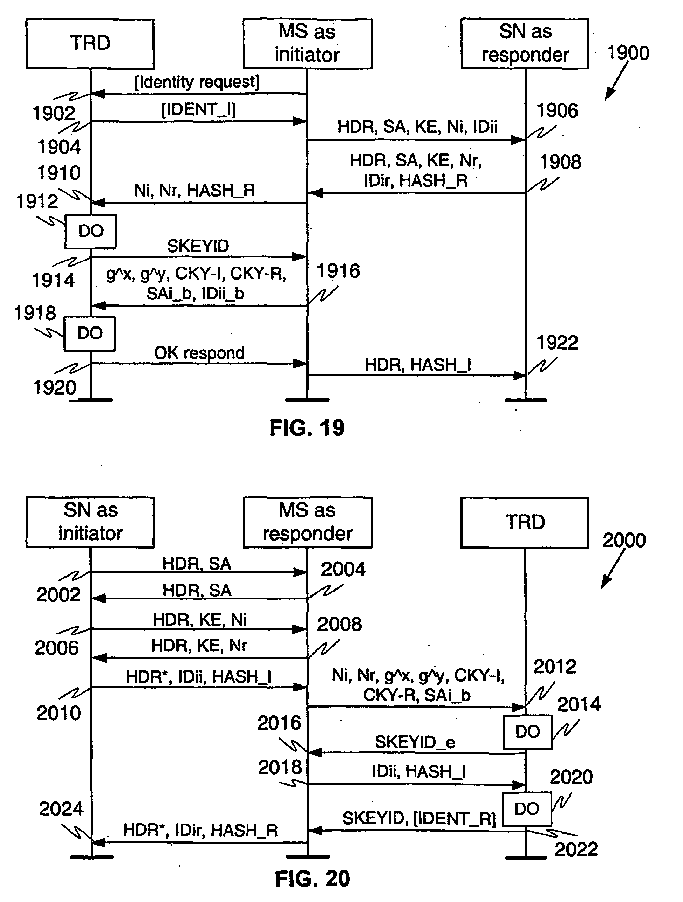

Figure 19 illustrates an exemplary embodiment 1900 of the aggressive mode method for authentication with pre-shared key in the simpler scenario. Now it is assumed that HASH_R is given to the TRD before SKEYID is revealed to the ME. That is because otherwise the ME could cheat the TRD by changing the origin of responder and then calculating.

Operations in steps 1902 - 1910 are known from previous embodiments of the invention. In step 1912 the TRD increases the COUNTP by one and compares the COUNTP to the BOUNDP. If the COUNTP is smaller than the BOUNDP, the TRD calculates SKEYID and sends it to the MS in step 1914. Otherwise the TRD terminates the session. In step 1916 the MS sends g^x, g^y, CKY-I, CKY-R, SAi_b and IDii_b to the TRD, when the TRD calculates HASH_R and compares it to the given HASH_R in step 1918. If HASH_R is valid the COUNTP is set to zero and otherwise the session is terminated. In step 1920 the TRD send Ok respond to the MS and the MS derives and sends the HDR and HASH_I to the SN.

This scenario needs fewer numbers of prf operations on the TRD.

Figure 20 illustrates another exemplary embodiment 2000 of the main mode method for authentication with pre-shared key in simpler scenario, where MS is the responder and SN is the initiator. Also now the operations in steps 2002 - 2012 are known from previous embodiments of the invention. In step 2014 the TRD increases COUNTP by one and compares COUNTP to BOUNDP. If COUNTP is smaller than BOUNDP, TRD calculates SKEYID, SKEYID_d, SKEYID_a and SKEYID_e. Again steps 2016and 2018 are known from previous embodiments. In step 2020 the TRD calculates HASH_I and compares it to given HASH_I. If calculated and given HASH_I are same, COUNTP is set to zero and SKEYID and possible IDENT_R (optional) are sent to the MS in step 2022. Otherwise the TRD terminates the session. The MS sends HDR*, IDir and HASH_R to the SN in step 2024.

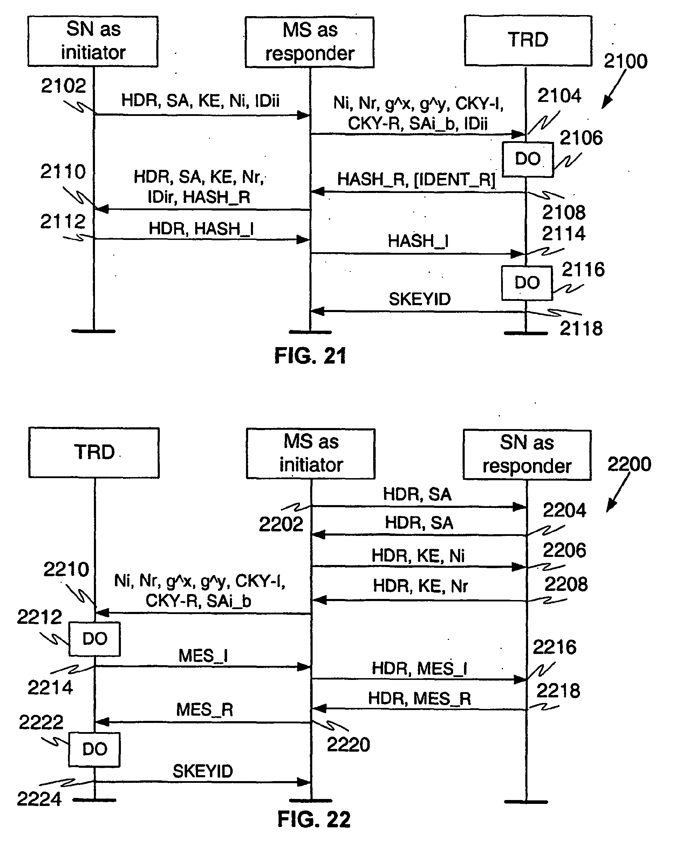

Figure 21 illustrates another exemplary embodiment 2100 of the aggressive mode method for authentication with pre-shared key in the simpler scenario, where operations in steps 2102 and 2104 are known from previous embodiments of the invention. In step 2106 the TRD increases the COUNTP by one and compares the COUNTP to the BOUNDP. If the COUNTP is smaller than the BOUNDP, the TRD calculates SKEYID, HASH_I and HASH_R and sends HASH_R and possible IDENT_R (optional) to the MS in step 2108. Again steps 2110-2114 are known from previous embodiments. In step 2116 the TRD calculates HASH_I and compares it to given HASH_I. If calculated and given HASH_I are same, the COUNTP is set to zero and SKEYID is sent to the MS in step 2118.

Figure 22 illustrates an exemplary embodiment 2200 of the main mode method for authentication with pre-shared key in the complicated scenario, where the MS is the initiator and the SN is responder. There is present a method of doing the phase 1 negotiation in that way the MS doesn't get the SKEYID. The important feature is that encrypted IDENT_I is not needed, because the ME cannot derive SKEYID and therefore K, this gives identity protection. So the TRD needs only symmetric cipher, hash function and some encoding methods.

The operations in steps 2202 - 2210 are know from previous embodiments of the invention. In step 2212 the TRD increases the COUNTP by one and compares the COUNTP to the BOUNDP. If the COUNTP is smaller than the BOUNDP, the TRD calculates SKEYID, SKEYID_d, SKEYID_a, SKEYID_e, HASH_I and MES_I, which is datagram containing IDii and HASH_I encrypted by key K. K is derived from SKEYID_d. In step 2214 the TRD sends MES_I to the MS. Steps 2216 - 2220 are known from previous embodiments of the invention. In step 2222 the TRD decrypts MES_R, calculates HASH_R and compares it to given HASH_R. If calculated and given HASH_R are same, the COLTNTP is set to zero and SKEYID is sent to the MS in step 2224.

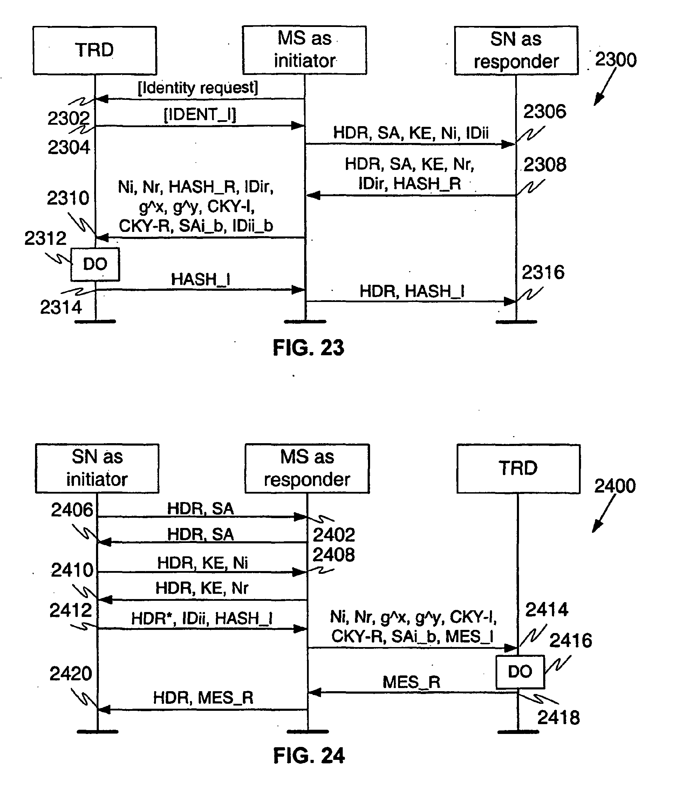

Figure 23 illustrates an exemplary embodiment 2300 of the aggressive mode method for authentication with pre-shared key in the complicated scenario, where the operations in steps 2302 - 2310 are known from previous embodiments of the invention. In step 2312 the TRD increases the COUNTP by one and compares the COUNTP to the BOUNDP. If the COUNTP is smaller than the BOUNDP, the TRD calculates HASH_R and compares it to given HASH_R. If calculated and given HASH_R are same, the COUNTP is set to zero and HASH_I is sent to the MS in step 2314. Otherwise the session is terminated. In step 2316 the MS sends HDR and HASH_I to the SN.

Figure 24 illustrates another exemplary embodiment 2400 of the main mode method for authentication with pre-shared key in complicated scenario, where MS is the responder and SN is the initiator. Again the operations in steps 2402 - 2414 are known from previous embodiments of the invention. In step 2416 the TRD increases the COUNTP by one and compares the COUNTP to the BOUNDP. If the COUNTP is smaller than the BOUNDP, the TRD calculates SKEYID, SKEYID_d, SKEYID_a and SKEYID_e. The TRD also decrypts MES_I, calculates HASH_I and compares it to given HASH_I. If calculated and given HASH_I are same, COUNTP is set to zero, datagram containing IDir and HASH_R is encrypted and MES_R is sent to the MS in step 2418. Finally the MS sends HDR and MES_R to the SN in step 2420.

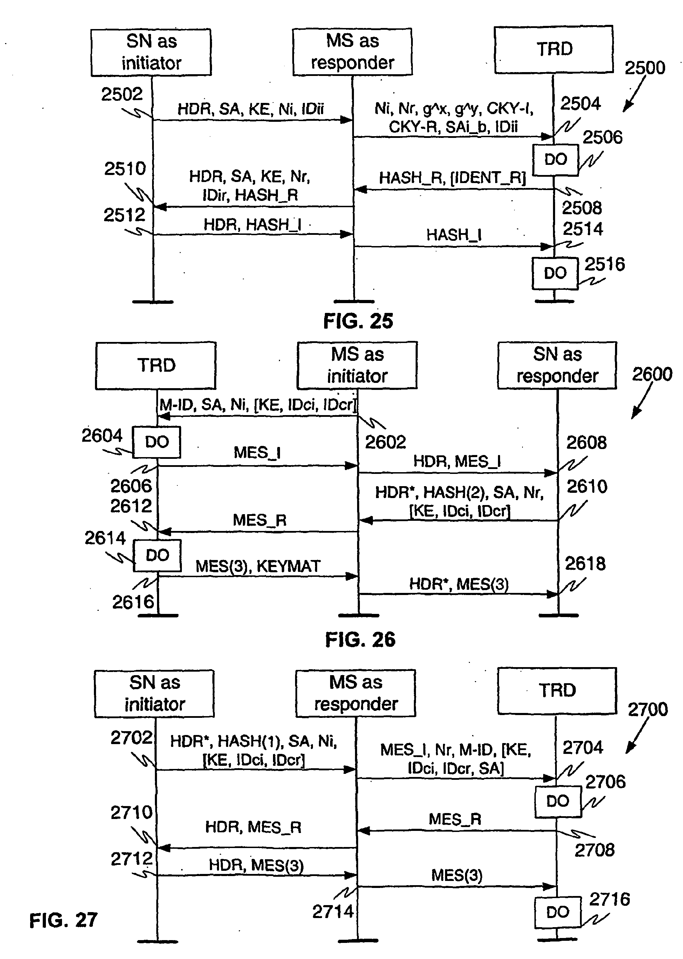

Figure 25 illustrates another exemplary embodiment 2500 of the aggressive mode method for authentication with pre-shared key in the complicated scenario. The operations in steps 2502 and 2504 are known from previous embodiments of the invention. In step 2506 the TRD increases the COUNTP by one and compares the COUNTP to the BOUNDP. If the COUNTP is smaller than the BOUNDP, the TRD calculates SKEYID, HASH_I and HASH_R and sends HASH_R and possible IDENT_R (optional) to the MS in step 2508. Steps 2510 - 2514 are also known from previous embodiments. In step 2516 the TRD calculates HASH_I and compares it to given HASH_I. If calculated and given HASH_I are same, the COUNTP is set to zero. Otherwise the session is terminated.

Next one can look at the quick mode.

After IKE SA has been created, parties can create IPSec SAs by using IKE SA. Here is needed SKEYID_e for encryption of ISAKMP messages, SKEYID_a for authenticating parties (mutually) and SKEYID_d where keying material for IPSec SA is created. If in phase 1 simpler scenario is used, then MS have SKEYID_e, SKEYID_a and SKEYID_d, so the TRD is not needed and whole phase 2 can be run on MS.

Figure 26 illustrates an exemplary embodiment 2600 of the method for authentication with the quick mode method. At the beginning the MS sends M-ID, SA, Ni and possible KE, IDci and IDcr (optional) to the TRD in step 2602. In step 2604 the TRD calculates HASH(1) and encrypts received datagram added HASH(1) by key K derived from SKEYID_e. The encrypted message is then denoted by MES_I. The TRD sends MES_I to the MS in step 2606, which sends HDR and MES_I to the SN in step 2608. In step 2610 the SN responds and sends HDR*, HASH(2), SA, Nr and possible KE, IDci and IDcr (optional) to the MS, which derives and sends MES_R to the TRD in step 2612. In step 2614 the TRD decrypts datagram MES_R, calculates HASH(2) and compares HASH(2) to received one. If the calculated and received HASH(2) are same, the TRD calculates also HASH(3), KEYMAT and encrypts HASH(3). Encrypted message is denoted by MES(3). The TRD sends MES(3) and KEYMAT in step 2616 to the MS, which sends HDR* and MES(3) to the SN in step 2618. It should be noted that here

$$KEYMAT = prf(SKEYID\_d, protocol \mid SPI \mid Ni\_b \mid Nr\_b)$$

so, KEYMAT can be given to MS without giving secret SKEYID_d. Here the TRD must be capable to calculate hashes and symmetric key ciphering.

Figure 27 illustrates another exemplary embodiment 2700 of the method for authentication with the quick mode method, where the MS is responder and the SN is initiator. The operation in steps 2702 and 2704 are known from previous embodiments of the invention. In step 2706 the TRD can select the possible SA (optional). In step 2706 the TRD also decrypts datagram MES_I, calculates HASH(1) and check validity. If it is not valid, the session is terminated. Otherwise the TRD calculates HASH(2) and HASH(3) and encrypts datagram containing HASH(2), SA and Nr and possible KE, IDci and IDcr. Again the operations in steps 2708 - 2714 are known from previous embodiments of the invention. In step 2716 the TRD decrypts MES(3) and verifies HASH(3).

Here the optional security association payload means that the TRD may be allowed to choose SA.

The invention has been explained above with reference to the aforementioned embodiments, and several advantages of the invention have been demonstrated. It is clear that the invention is not only restricted to these embodiments, but comprises all possible embodiments within the spirit and scope of the inventive thought and the following patent claims.

In addition it should be noted that there are different possibilities for implementation this invention. Maybe the simplest is to use SWIM as a TRD. By SWIM it is meant a smart card that has both SIM (or USIM) and WIM. If the TRD is SWIM, then according to existing WIM specification all needed cryptographic features are in WIM. Other possibility is that in UMTS mobile terminal there is a USIM and another tamper resistant smart card as a TRD for needed cryptographic operations. Third possibility is that required cryptographic algorithms are stored in UICC i.e. the TRD is simply co-located with USIM in the same smart card. Further it should be noticed that according to the present invention the TRD or at least part of it could also be implemented using internal security systems of mobile equipment. This kind of system, which does not use a separate external device, such as a smart card, may be secured and maintained by an internal hardware of the mobile equipment.

Especially it should be noticed that the invention has been explained above with examples concerning with IKEv1 protocol but the invention may be used also with IKEv2 protocol or any other protocol comprising the basic functionalities of IKE.

CITED DOCUMENT:

[1] Bradner, S., "Key Words for use in RFCs to indicate Requirement Levels", BCP 14, RFC 2119, March 1997.

**Claims**

1. A method for using an information network Key Exchange (IKE) protocol securely in Mobile Equipment (ME) provided with a tamper resistant device (TRD), for an operationally efficient and secure implementation of said protocol, **characterized in that** the Key Exchange payload is distributed between the Mobile Equipment and the tamper resistant device.

2. A method according to claim 1, **characterized in that** said information network Key Exchange (IKE) protocol is at least one of the following: IKEv1 and IKEv2 (son-of-IKE).

3. A method according to claim 1, **characterized in that** at least part of the calculation required by the Key Exchange protocol are done on the tamper resistant device.

4. A method according to claim 1, **characterized in that** the most of the complex public key operations are done in the Mobile Equipment.

5. A method according to claim 1, **characterized in that** the Mobile Equipment do the phase 1 negotiation of the Key Exchange protocol by co-operating with the tamper resistant device.

6. A method according to claim 1, **characterized in that** at least phase 1 authentication is done on the tamper resistant device.

7. A method according to claim 1, **characterized in that** the Mobile Equipment creates Internet security protocol security associations (IPSec SA) by co-operating with the tamper resistant device.

8. A method according to claim 1, **characterized in that** after phase 1 negotiation the Mobile Equipment creates Internet security protocol security associations (IPSec SA) without the tamper resistant device.

9. A method according to claim 1, **characterized in that** the tamper resistant device carries out decrypt and encrypt operations.

10. A method according to claim 1, **characterized in that** the Mobile Equipment requests secret information from the tamper resistant device and the information is encrypted by the tamper resistant device before delivering it to the Mobile Equipment.

11. A method according to claim 1, **characterized in that** the tamper resistant device signs and verifies messages.

**12.** A method according to claim 1, **characterized in that** the Mobile Equipment sends at least one HASH value and required information for calculating said HASH value to the tamper resistant device.

**13.** A method according to claim 1, **characterized in that** the tamper resistant device calculates at least one HASH value and compares it to the at least one given HASH value.

**14.** A method according to claim 1, **characterized in that** the tamper resistant device calculates at least one of the following information: HASH, SKEYID, SKEYID_e, SKEYID_a, SKEYID_d, the pseudorandom numbers needed in calculating the Diffie-Hellman information and modular powers of big integers.

**15.** A method according to claim 1, **characterized in that** the number of request sent to the tamper resistant device is measured.

**16.** A method according to claim 1, **characterized in that** the predetermined bound is set and said number of the request sent to the tamper resistant device is not allowed to exceed the said bound.

**17.** A method according to claim 1, **characterized in that** after successful verification said number of the request sent to the tamper resistant device is set to zero.

**18.** An arrangement for using an Information network Key Exchange (IKE) protocol securely in Mobile Equipment (ME) provided with a tamper resistant device (TRD), for an operationally efficient and secure implementation of said protocol, **characterized in that** the arrangement comprises a distribution means for distributing the Key Exchange payload between the Mobile Equipment and the tamper resistant device.

**19.** An arrangement according to claim 18, **characterized in that** said information network Key Exchange (IKE) protocol is at least one of the following: IKEv1 and IKEv2 (son-of-IKE).

**20.** An arrangement according to claim 18, **characterized in that** the arrangement comprises means for delivering information between the Mobile Equipment and the tamper resistant device.

**21.** An arrangement according to claim 18, **characterized in that** the Mobile Equipment is available the access to Internet.

**22.** An arrangement according to claim 18, **characterized in that** the Mobile Equipment operates in an UMTS environment.

**23.** An arrangement according to claim 18, **characterized in that** the tamper resistant device comprises at least one of the following: USIM, WIM, SWIM (SWIM comprises SIM and WIM or USIM and WIM) and other tamper resistant device.

**24.** An arrangement according to claim 18, **characterized in that** the tamper resistant device is co-located with USIM in the same smart card.

**25.** An arrangement according to claim 18, **characterized in that** the tamper resistant device is implemented using internal security systems of the Mobile Equipment (ME).

**26.** An arrangement according to claim 18, **characterized in that** the tamper resistant device is arranged to perform the parts of the calculation required by the Key Exchange.

**27.** An arrangement according to claim 18, **characterized in that** the Mobile Equipment is arranged to perform the most complex public key operations.

**28.** An arrangement according to claim 18, **characterized in that** the tamper resistant device is arranged to perform at least phase 1 authentication.

**29.** An arrangement according to claim 18, **characterized in that** the Mobile Equipment is arranged to create Internet security protocol security associations (IPSec SA) after phase 1 negotiation without the tamper resistant device.

**30.** An arrangement according to claim 18, **characterized in that** the tamper resistant device is arranged to carry out decrypt and encrypt operations.

**31.** An arrangement according to claim 18, **characterized in that** the tamper resistant device is arranged to sign and verify messages.

**32.** An arrangement according to claim 18, **characterized in that** the tamper resistant device is arranged to calculate at least one of the following information: HASH, SKEYID, SKEYID_e, SKEYID_a, SKEYID_d, the pseudorandom numbers needed in calculating the Diffie-Hellman information and modular powers of big integers.

**33.** An arrangement according to claim 18, **characterized in that** the arrangement comprises means for measuring the number of request sent to the tamper resistant device.

**34.** An arrangement according to claim 18, **characterized in that** the arrangement comprises means for comparing said number of request sent to the tamper resistant device to the set bound.

**35.** An arrangement according to claim 18, **characterized in that** the arrangement comprises means for setting said number of the request to zero.

**Patentansprüche**

**1.** Verfahren zur sicheren Verwendung eines Informationsnetzwerk-Schlüsselaustausch-(IKE) Protokolls in Mobilausrüstung (ME), die mit einer manipulationssicheren Vorrichtung (TRD) versehen ist, für eine funktionsfähig effiziente und sichere Implementierung des Protokolls,
**dadurch gekennzeichnet, dass**
die Schlüsselaustausch-Nutzdaten zwischen der Mobilausrüstung und der manipulationssicheren Vorrichtung verteilt werden.

**2.** Verfahren nach Anspruch 1, **dadurch gekennzeichnet, dass** das Informationsnetzwerk-Schlüsselaustausch- (IKE) Protokoll mindestens eins der folgenden ist:

IKEv1 und IKEv2 (son-of-IKE).

**3.** Verfahren nach Anspruch 1, **dadurch gekennzeichnet, dass** mindestens ein Teil der durch das Schlüsselaustausch-Protokoll erforderlichen Berechnung auf der manipulationssicheren Vorrichtung ausgeführt wird.

**4.** Verfahren nach Anspruch 1, **dadurch gekennzeichnet, dass** die meisten der komplexen Vorgänge öffentlicher Schlüssel in der Mobilausrüstung ausgeführt werden.

**5.** Verfahren nach Anspruch 1, **dadurch gekennzeichnet, dass** die Mobilausrüstung die Phase-1-Aushandlung des Schlüsselaustausch-Protokolls durch Zusammenwirken mit der manipulationssicheren Vorrichtung ausführt.

**6.** Verfahren nach Anspruch 1, **dadurch gekennzeichnet, dass** mindestens die Phase-1-Authentifizierung auf der manipulationssicheren Vorrichtung ausgeführt wird.

**7.** Verfahren nach Anspruch 1, **dadurch gekennzeichnet, dass** die Mobilausrüstung Internet-Sicherheitsprotokoll-Sicherheitsverknüpfungen (IPSec SA) durch Zusammenwirken mit der manipulationssicheren Vorrichtung erzeugt.

**8.** Verfahren nach Anspruch 1, **dadurch gekennzeichnet, dass** nach der Phase-1-Aushandlung die Mobilausrüstung Internet-Sicherheitsprotokoll-Sicherheitsverknüpfungen (IPSec SA) ohne die manipulationssichere Vorrichtung erzeugt.

**9.** Verfahren nach Anspruch 1, **dadurch gekennzeichnet, dass** die manipulationssichere Vorrichtung Entschlüsselungs- und Verschlüsselungs-Vorgänge ausführt.

**10.** Verfahren nach Anspruch 1, **dadurch gekennzeichnet, dass** die Mobilausrüstung geheime Informationen von der manipulationssicheren Vorrichtung anfordert, und die Informationen durch die manipulationssichere Vorrichtung verschlüsselt werden, bevor sie an die Mobilausrüstung geliefert werden.

11. Verfahren nach Anspruch 1, **dadurch gekennzeichnet, dass** die manipulationssichere Vorrichtung Nachrichten signiert und verifiziert.

12. Verfahren nach Anspruch 1, **dadurch gekennzeichnet, dass** die Mobilausrüstung mindestens einen HASH-Wert und erforderliche Informationen zur Berechnung des HASH-Werts an die manipulationssichere Vorrichtung sendet.

13. Verfahren nach Anspruch 1, **dadurch gekennzeichnet, dass** die manipulationssichere Vorrichtung mindestens einen HASH-Wert berechnet und ihn mit dem mindestens einem vorgegebenen HASH-Wert vergleicht.

14. Verfahren nach Anspruch 1, **dadurch gekennzeichnet, dass** die manipulationssichere Vorrichtung mindestens eine der folgenden Informationen berechnet:

    HASH, SKEYID, SKEYID_e, SKEYID_a, SKEYID_d, die Pseudozufallszahlen, die beim Berechnen der Diffie-Hellman-Informationen erforderlich sind und Modulo-Potenzen von großen ganzen Zahlen.

15. Verfahren nach Anspruch 1, **dadurch gekennzeichnet, dass** die Anzahl von Anforderungen, die an die manipulationssichere Vorrichtung gesendet werden, gemessen wird.

16. Verfahren nach Anspruch 1, **dadurch gekennzeichnet, dass** die vorbestimmte Grenze gesetzt wird und die Anzahl der an die manipulationssichere Vorrichtung gesendeten Anforderungen die Grenze nicht überschreiten darf.

17. Verfahren nach Anspruch 1, **dadurch gekennzeichnet, dass** nach einer erfolgreichen Verifizierung die Anzahl der an die manipulationssichere Vorrichtung gesendeten Anforderungen auf Null gesetzt wird.

18. Anordnung zur sicheren Verwendung eines Informationsnetzwerk-Schlüsselaustausch- (IKE) Protokolls in Mobilausrüstung (ME), die mit einer manipulationssicheren Vorrichtung (TRD) versehen ist, für eine funktionsfähig effiziente und sichere Implementierung des Protokolls,
    **dadurch gekennzeichnet, dass**
    die Anordnung ein Verteilungsmittel zum Verteilen der Schlüsselaustausch-Nutzdaten zwischen der Mobilausrüstung und der manipulationssicheren Vorrichtung umfasst.

19. Anordnung nach Anspruch 18, **dadurch gekennzeichnet, dass** das Informationsnetzwerk-Schlüsselaustausch-(IKE) Protokoll mindestens eins der folgenden ist:

    IKEv1 und IKEv2 (son-of-IKE).

20. Anordnung nach Anspruch 18, **dadurch gekennzeichnet, dass** die Anordnung Mittel zum Liefern von Informationen zwischen der Mobilausrüstung und der manipulationssicheren Vorrichtung umfasst.

21. Anordnung nach Anspruch 18, **dadurch gekennzeichnet, dass** der Mobilausrüstung der Zugang zum Internet verfügbar ist.

22. Anordnung nach Anspruch 18, **dadurch gekennzeichnet, dass** die Mobilausrüstung in einer UMTS-Umgebung arbeitet.

23. Anordnung nach Anspruch 18, **dadurch gekennzeichnet, dass** die manipulationssichere Vorrichtung mindestens eines der folgenden umfasst:

    USIM, WIM, SWIM (SWIM umfasst SIM und WIM oder USIM und WIM) und andere manipulationssichere Vorrichtungen.

24. Anordnung nach Anspruch 18, **dadurch gekennzeichnet, dass** die manipulationssichere Vorrichtung mit USIM in der gleichen Chipkarte angeordnet ist.

25. Anordnung nach Anspruch 18, **dadurch gekennzeichnet, dass** die manipulationssichere Vorrichtung unter Verwendung interner Sicherheitssysteme der Mobilausrüstung (ME) implementiert ist.

26. Anordnung nach Anspruch 18, **dadurch gekennzeichnet, dass** die manipulationssichere Vorrichtung eingerichtet ist, die Teile der durch den Schlüsselaustausch erforderlichen Berechnung auszuführen.

27. Anordnung nach Anspruch 18, **dadurch gekennzeichnet, dass** die Mobilausrüstung eingerichtet ist, die komplexesten Vorgänge öffentlicher Schlüssel auszuführen.

28. Anordnung nach Anspruch 18, **dadurch gekennzeichnet, dass** die manipulationssichere Vorrichtung eingerichtet ist, zumindest Phase-1-Authentifizierung auszuführen.

29. Anordnung nach Anspruch 18, **dadurch gekennzeichnet, dass** die Mobilausrüstung eingerichtet ist, Internet-Sicherheitsprotokoll-Sicherheitsverknüpfungen (IPSec SA) nach der Phase-1-Aushandlung ohne die manipulationssichere Vorrichtung auszuführen.

30. Anordnung nach Anspruch 18, **dadurch gekennzeichnet, dass** die manipulationssichere Vorrichtung eingerichtet ist, Entschlüsselungs- und Verschlüsselungs-Vorgänge auszuführen.

31. Anordnung nach Anspruch 18, **dadurch gekennzeichnet, dass** die manipulationssichere Vorrichtung eingerichtet ist, Nachrichten zu signieren und zu verifizieren.

32. Anordnung nach Anspruch 18, **dadurch gekennzeichnet, dass** die manipulationssichere Vorrichtung eingerichtet ist, mindestens eine der folgenden Informationen zu berechnen:

   HASH, SKEYID, SKEYID_e, SKEYID_a, SKEYID_d, die Pseudozufallszahlen, die beim Berechnen der Diffie-Hellman-Informationen erforderlich sind und Modulo-Potenzen von großen ganzen Zahlen.

33. Anordnung nach Anspruch 18, **dadurch gekennzeichnet, dass** die Anordnung Mittel zum Messen der Anzahl von Anforderungen umfasst, die an die manipulationssichere Vorrichtung gesendet werden.

34. Anordnung nach Anspruch 18, **dadurch gekennzeichnet, dass** die Anordnung Mittel zum Vergleichen der Anzahl von Anforderungen, die an die manipulationssichere Vorrichtung gesendet werden, mit der gesetzten Grenze umfasst.

35. Anordnung nach Anspruch 18, **dadurch gekennzeichnet, dass** die Anordnung Mittel zum Setzen der Anzahl der Anforderungen auf Null umfasst.

**Revendications**

1. Procédé pour utiliser un protocole d'échange de clés de réseau d'informations (IKE) en toute sécurité dans un équipement mobile (ME) muni d'un dispositif résistant aux manipulations illicites (TRD), pour une mise en oeuvre efficace et sécurisée de manière opérationnelle dudit protocole, **caractérisé en ce que** la charge utile d'échange de clés est distribuée entre l'équipement mobile et le dispositif résistant aux manipulations illicites.

2. Procédé selon la revendication 1, **caractérisé en ce que** ledit protocole d'échange de clés de réseau d'informations (IKE) est au moins l'un des suivants : IKEv1 et IKEv2 (son-of-IKE).

3. Procédé selon la revendication 1, **caractérisé en ce qu'**au moins une partie du calcul requis par le protocole d'échange de clés est effectuée sur le dispositif résistant aux manipulations illicites.

4. Procédé selon la revendication 1, **caractérisé en ce que** la plupart des opérations de clés publiques complexes sont effectuées dans l'équipement mobile.

5. Procédé selon la revendication 1, **caractérisé en ce que** l'équipement mobile effectue la négociation de phase 1 du protocole d'échange de clés en coopérant avec le dispositif résistant aux manipulations illicites.

6. Procédé selon la revendication 1, **caractérisé en ce qu'**au moins l'authentification de phase 1 est effectuée sur le dispositif résistant aux manipulations illicites.

7. Procédé selon la revendication 1, **caractérisé en ce que** l'équipement mobile crée des associations de sécurité de protocole de sécurité Internet (IPSec SA) en coopérant avec le dispositif résistant aux manipulations illicites.

8. Procédé selon la revendication 1, **caractérisé en ce qu'**après la négociation de phase 1 l'équipement mobile crée des associations de sécurité de protocole de sécurité Internet (IPSec SA) sans le dispositif résistant aux manipulations illicites.

9. Procédé selon la revendication 1, **caractérisé en ce que** le dispositif résistant aux manipulations illicites effectue les opérations de décryptage et de cryptage.

10. Procédé selon la revendication 1, **caractérisé en ce que** l'équipement mobile demande des informations secrètes au dispositif résistant aux manipulations illicites et les informations sont cryptées par le dispositif résistant aux manipulations illicites avant d'être fournies à l'équipement mobile.

11. Procédé selon la revendication 1, **caractérisé en ce que** le dispositif résistant aux manipulations illicites signe et vérifie des messages.

12. Procédé selon la revendication 1, **caractérisé en ce que** l'équipement mobile envoie au moins une valeur HASH et des informations requises pour calculer ladite valeur HASH au dispositif résistant aux manipulations illicites.

13. Procédé selon la revendication 1, **caractérisé en ce que** le dispositif résistant aux manipulations illicites calcule au moins une valeur HASH et la compare à l'au moins une valeur HASH donnée.

14. Procédé selon la revendication 1, **caractérisé en ce que** le dispositif résistant aux manipulations illicites calcule au moins l'une des informations suivantes: HASH, SKEYID, SKEYID_e, SKEYID_a, SKEYID_d, les nombres pseudo aléatoires nécessaires pour calculer les informations de Diffie-Hellman et les puissances modulaires de grands nombres entiers.

15. Procédé selon la revendication 1, **caractérisé en ce que** le nombre de demandes envoyées au dispositif résistant aux manipulations illicites est mesuré.

16. Procédé selon la revendication 1, **caractérisé en ce que** la limite prédéterminée est fixée et ledit nombre de demandes envoyées au dispositif résistant aux manipulations illicites n'est pas autorisé à dépasser ladite limite.

17. Procédé selon la revendication 1, **caractérisé en ce qu'**après la vérification réussie ledit nombre de demandes envoyées au dispositif résistant aux manipulations illicites est réglé à zéro.

18. Agencement pour utiliser un protocole d'échange de clés de réseau d'informations (IKE) en toute sécurité dans un équipement mobile (ME) muni d'un dispositif résistant aux manipulations illicites (TRD), pour une mise en oeuvre efficace et sécurisée de manière opérationnelle dudit protocole, **caractérisé en ce que** l'agencement comprend un moyen de distribution pour distribuer la charge utile d'échange de clés entre l'équipement mobile et le dispositif résistant aux manipulations illicites.

19. Agencement selon la revendication 18, **caractérisé en ce que** ledit protocole d'échange de clés de réseau d'informations (IKE) est au moins l'un des suivants : IKEv1 et IKEv2 (son-of-IKE).

20. Agencement selon la revendication 18, **caractérisé en ce que** l'agencement comprend des moyens pour fournir des informations entre l'équipement mobile et le dispositif résistant aux manipulations illicites.

21. Agencement selon la revendication 18, **caractérisé en ce que** l'équipement mobile est disponible pour accéder à Internet.

22. Agencement selon la revendication 18, **caractérisé en ce que** l'équipement mobile fonctionne dans un environnement UMTS.

23. Agencement selon la revendication 18, **caractérisé en ce que** le dispositif résistant aux manipulations illicites comprend au moins l'un des suivants : USIM, WIM, SWIM (SWIM comprend SIM et WIM ou USIM et WIM) et d'autres dispositifs résistant aux manipulations illicites.

**24.** Agencement selon la revendication 18, **caractérisé en ce que** le dispositif résistant aux manipulations illicites est co-situé avec USIM dans la même carte à puce.

**25.** Agencement selon la revendication 18, **caractérisé en ce que** le dispositif résistant aux manipulations illicites est mis en oeuvre en utilisant des systèmes de sécurité internes de l'équipement mobile (ME).

**26.** Agencement selon la revendication 18, **caractérisé en ce que** le dispositif résistant aux manipulations illicites est agencé pour effectuer les parties du calcul requises par l'échange de clés.

**27.** Agencement selon la revendication 18, **caractérisé en ce que** l'équipement mobile est agencé pour effectuer les opérations de clés publiques les plus complexes.

**28.** Agencement selon la revendication 18, **caractérisé en ce que** le dispositif résistant aux manipulations illicites est agencé pour effectuer au moins une authentification de phase 1.

**29.** Agencement selon la revendication 18, **caractérisé en ce que** l'équipement mobile est agencé pour créer des associations de sécurité de protocole de sécurité Internet (IPSec SA) après la négociation de phase 1 sans le dispositif résistant aux manipulations illicites.

**30.** Agencement selon la revendication 18, **caractérisé en ce que** le dispositif résistant aux manipulations illicites est agencé pour effectuer les opérations de décryptage et de cryptage.

**31.** Agencement selon la revendication 18, **caractérisé en ce que** le dispositif résistant aux manipulations illicites est agencé pour signer et vérifier des messages.

**32.** Agencement selon la revendication 18, **caractérisé en ce que** le dispositif résistant aux manipulations illicites est agencé pour calculer au moins l'une des informations suivantes : HASH, SKEYID, SKEYID_e, SKEYID_a, SKEYID_ d, les nombres pseudo aléatoires nécessaires pour calculer les informations de Diffie-Hellman et les puissances modulaires de grands nombres entiers.

**33.** Agencement selon la revendication 18, **caractérisé en ce que** l'agencement comprend des moyens pour mesurer le nombre de demandes envoyées au dispositif résistant aux manipulations illicites.

**34.** Agencement selon la revendication 18, **caractérisé en ce que** l'agencement comprend des moyens pour comparer ledit nombre de demandes envoyées au dispositif résistant aux manipulations illicites à la limite fixée.

**35.** Agencement selon la revendication 18, **caractérisé en ce que** l'agencement comprend des moyens pour régler ledit nombre de requêtes à zéro.

**FIG. 1**

**FIG. 2**

**FIG. 3**

**FIG. 4**

| SN as initiator | MS as responder | TRD | 500 |

502 — HDR, SA, KE, Ni, IDii →

HASH_R → 504

DO — 506

510 ← HDR, SA, KE, Nr, IDir, SIG_R, [CERT]

← SIG_R, [IDENT_I] — 508

512 — HDR, SIG_I, [CERT] →

HASH_I, SIG_I → 514

DO — 516

**FIG. 5**

| TRD | MS as initiator | SN as responder | 600 |

602 — HDR, SA → 604

← HDR, SA

606 ← Request for g^x

608 DO

g^x, Ni → 612 HDR, KE, Ni →

610

614 ← HDR, KE, Nr

616 ← g^y, Nr, CKY-I, CKY-R, SAi_b

618 DO

MES_I → 622 HDR, MES_I →

620
628

624 DO

← HDR, MES_R

630 ← MES_R — 626

DO

IDir → 632

634 DO

**FIG. 6**

```
        TRD                  MS as                SN as
                           initiator            responder        700

 704        Request for phase 1     702
     DO                                                708
       g^x, Ni, [IDENT_I]           HDR, SA, KE, Ni, IDii
 706                              HDR, SA, KE, Nr, IDir,    710
 712   g^y, Nr, CKY-I, CKY-R, [IDii],  SIG_R, [CERT]
 714   IDir, SAi_b, [CERT], SIG_R
     DO                                                718
       [CERT], SIG_I              HDR, SIG_I, [CERT]
 716
```

**FIG. 7**

```
       SN as                 MS as                TRD
     initiator             responder                       800
 804      HDR, SA
          HDR, SA              802
 806      HDR, KE, Ni                                 808
                               g^x, Ni
                                                      810
                                          DO
 814                           g^y, Nr
          HDR, KE, Nr
 816      HDR, MES_I           MES_I, CKY-I,          812
                               CKY_R, SAi_b
                                                      820
                  818                     DO
 824                           MES_R
          HDR, MES_R                                  822
```

**FIG. 8**

**FIG. 9**

**FIG. 10**

FIG. 11

FIG. 12

**FIG. 13**

**FIG. 14**

FIG. 15

FIG. 16

FIG. 17

FIG. 18

FIG. 19

FIG. 20

FIG. 21

FIG. 22

FIG. 23

FIG. 24

**FIG. 25**

SN as initiator     MS as responder     TRD    2500

2502 — HDR, SA, KE, Ni, IDii → Ni, Nr, g^x, g^y, CKY-I, CKY-R, SAi_b, IDii — 2504

2506 — DO

2510 — HDR, SA, KE, Nr, IDir, HASH_R ← HASH_R, [IDENT_R] — 2508

2512 — HDR, HASH_I → HASH_I — 2514

2516 — DO

**FIG. 26**

TRD     MS as initiator     SN as responder    2600

← M-ID, SA, Ni, [KE, IDci, IDcr] — 2602

2604 — DO

2606 — MES_I → HDR, MES_I — 2608

HDR*, HASH(2), SA, Nr, [KE, IDci, IDcr] — 2610

2612 — MES_R ←

2614 — DO

2616 — MES(3), KEYMAT → HDR*, MES(3) — 2618

**FIG. 27**

SN as initiator     MS as responder     TRD    2700

2702 — HDR*, HASH(1), SA, Ni, [KE, IDci, IDcr] → MES_I, Nr, M-ID, [KE, IDci, IDcr, SA] — 2704

2706 — DO

2710 — HDR, MES_R ← MES_R — 2708

2712 — HDR, MES(3) → MES(3) →

2714

2716 — DO

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BRADNER, S.** Key Words for use in RFCs to indicate Requirement Levels. *BCP,* March 1997, vol. 14, 2119